# EUROPEAN PATENT SPECIFICATION

(11) **EP 4 629 658 B1**
(45) Date of publication and mention of the grant of the patent: **02.09.2026**
(21) Application number: 22968623.3
(22) Date of filing: 16.12.2022
(51) Int. Cl.: H01Q 1/27, H01Q 9/42, H01Q 13/10, H01Q 5/371, H01Q 5/25, H04R 1/10, G06F 3/041, H04W 4/80, H01Q 5/378, H01Q 1/38

(54) **WIRELESS EARBUD**
DRAHTLOSER OHRHÖRER
ÉCOUTEUR BOUTON SANS FIL

(43) Date of publication of application: 08.10.2025
(73) Proprietor: LG Electronics Inc., Yeongdeungpo-gu Seoul 07336 (KR)
(72) Inventor: RYU, Seungwoo, Seoul 06772 (KR); SIN, Mansoo, Seoul 06772 (KR)
(74) Representative: Vossius & Partner Patentanwälte Rechtsanwälte mbB
(86) International application number: PCT/KR2022/020627
(87) International publication number: WO 2024/128363

(56) References cited:
- EP-A1- 4 030 779
- WO-A1-2016/207215
- JP-B2- 6 722 865
- KR-A- 20170 039 572
- KR-A- 20170 039 572
- KR-A- 20180 093 373
- KR-A- 20210 111 453
- US-A1- 2018 139 548
- US-A1- 2020 091 590
- US-B2- 10 715 937

## Description

### Technical Field

The present disclosure relates to an electronic device that receives content and, more particularly, to an electronic device that receives content through an antenna. A specific embodiment of the present disclosure relates to a wireless earbud equipped with an antenna and a control circuit.

### Background Art

Electronic devices, such as accessories for mobile phones, computers, and other electronic equipment, may include a wireless circuit. For example, earbuds can be used as electronic devices that wirelessly communicate with mobile phones and other equipment.

Small-sized electronic devices, such as wireless earbuds, may be configured to receive content reproduced from a mobile terminal, which operates a host device, over a Bluetooth frequency band. Wireless earbuds correspond to wearable electronic devices configured to fit in the human ear. EP 4 030 779 A1 discloses a Bluetooth earbud comprising a stalk and an antenna disposed on a dielectric holder.

Problems may occur in implementing antennas and wireless communication circuits in small-sized devices, such as wireless earbuds. In this regard, an antenna enabling wireless signals to be radiated may not effectively operate within the main body of a wireless earbud worn on the human body. Consequently, this ineffective operation of the antenna results in a problem where it is difficult to accomplish the desired performance in wireless communication with nearby electronic devices.

Wireless earbuds may be designed to receive wireless signals through a Bluetooth frequency band, which is a predetermined bandwidth having a center frequency of approximately 2.45 GHz. In this regard, the antenna included in the wireless earbud needs to be designed with a broader operational bandwidth than those of other electronic devices that perform wireless communication through the Bluetooth frequency band. The reason for this is that the resonance frequency of the antenna changes due to a user's movement when the user wears the wireless earbud or due to the movement of the wireless earbud within the ear canal. In addition, since the space available for arranging the antenna inside the mechanism of the wireless earbud is limited, the antenna performance may become susceptible to manufacturing deviations. Accordingly, there is a need to implement an electronic device, such as a wireless earbud, which is equipped with an improved antenna and a control circuit.

In addition, in densely populated areas, an industry-science-medical (ISM) band, such as the Bluetooth frequency band, may experience temporary degradation in signal quality, which in turn may lead to a temporary reduction in reproduction quality when reproducing content. To address this issue, content may be reproduced by receiving a wireless signal through an ultra-wide band (UWB).

An issue arises in that it is difficult to implement an antenna structure capable of operating in both the Bluetooth frequency band and the UWB frequency band within the limited internal space inside the mechanical structure of the wireless earbud. In this regard, the antenna structure needs to be implemented to cover a frequency band ranging from 6.25 GHz to 8.25 GHz. The antenna structure needs to be implemented to cover a frequency band of 6.25 GHz to 10 GHz for UWB communication services across various wireless channels.

### Disclosure of Invention

### Technical Problem

One object of the present disclosure is to address the above-mentioned and other related problems. Another object of the present disclosure is to provide an electronic device, such as a wireless earbud equipped with an improved antenna and a control circuit.

A further object of the present disclosure is to increase an operational bandwidth of an antenna provided in a wireless earbud.

Another object of the present disclosure is to ensure reliable reception of wireless signals even when the resonance frequency of an antenna changes due to a wireless earbud being worn.

Still another object of the present disclosure is to minimize changes in antenna performance caused by the limited space available for arranging an antenna inside the mechanism of a wireless earbud.

Yet another object of the present disclosure is to implement an antenna structure that is capable of operating in a Bluetooth frequency band and a UWB band inside the mechanism of a wireless earbud.

### Solution to Problem

In order to achieve the above-mentioned objects and related other objects, according to one aspect of the present disclosure, there is provided an earbud according to claim 1. Preferred or optional embodiments of the invention are set out in the dependent claims.

The following embodiments are not covered by the subject-matter of the claims and are retained merely as examples useful for understanding the claimed invention.

According to another aspect of the present disclosure, there is provided an electronic device including: a dielectric housing having a main body portion with a port and a protruding portion that extends from the main body portion; and an antenna arranged inside the protruding portion and radiating a wireless signal toward the exterior of the electronic device. The antenna includes: a first conductive pattern formed on a first surface inside the protruding portion; a second conductive pattern formed on a second surface perpendicular to the first surface; a connection portion configured to electrically connect the first conductive pattern and a printed circuit board (PCB) to each other; a third conductive pattern formed on a third surface perpendicular to the first surface and facing the second surface, and including a feeding connection pattern and a ground connection pattern; a slot region formed by removing at least one region of the first conductive pattern on the first surface and the third conductive pattern on the third surface; and a fourth conductive pattern arranged on the third surface such that the fourth conductive pattern is adjacent to the feeding connection pattern of the third conductive pattern.

According to an embodiment, the first conductive pattern and the connection portion may be configured to radiate a signal in a first frequency band. The first conductive pattern and the second conductive pattern may be configured to radiate a signal in a second frequency band different from the first frequency band. The fourth conductive pattern and the slot region may be configured to radiate a signal in a third frequency band that is broader than the first frequency band and the second frequency band.

According to an embodiment, in the electronic device, the slot region may be formed between the feeding connection pattern and the ground connection pattern. The slot region may be formed to have a first length on one axis on the first surface and a first width on the other axis. The feeding connection pattern may be connected to a signal line of the coaxial cable arranged under a dielectric structure, and the ground connection pattern may be connected to a ground structure connected to a second PCB arranged under the dielectric structure.

According to an embodiment, in the electronic device, the antenna may include a second slot region formed on the first surface such that the second slot region is positioned at the same point on the one axis as the slot region and is spaced apart from the slot region on the other axis. The antenna may include a third slot region formed on the first surface such that the third slot region is spaced apart from the slot region on the other axis. The antenna may include a fourth slot region formed on the first surface and the third surface such that the fourth slot region is spaced apart from the slot region on the other axis.

According to an embodiment, in the electronic device, the first slot region and the second slot region may be formed such that the first slot region and the second slot region are spaced apart, by a second length in the direction of the other axis, from an end of the first conductive pattern adjacent to the stalk. The length of the third slot region may be defined as a third length, which is shorter than the second length, in the direction of the other axis. The length from one end of the fourth slot region to the end of the first conductive pattern may be defined as a fourth length, which is shorter than the second length, in the direction of the other axis.

According to an embodiment, in the electronic device, the second conductive pattern may include a touch sensor. The first conductive pattern may be formed to have a first pattern length in the direction of the one axis of the stalk, and the second conductive pattern may be formed to have a second pattern length shorter than the first pattern length in the direction of the one axis. The fourth conductive pattern formed on the third surface facing the second conductive pattern may include a force sensor or a pressure sensor. The fourth conductive pattern may be arranged between an end of the other side of a sub-pattern of the third conductive pattern formed on the third surface and an end of one side of the feeding connection pattern formed on the third surface.

### Advantageous Effects of Invention

The technical effects of a wireless earbud equipped with this broadband antenna are described as follows.

According to the present disclosure, a broadband antenna in electronic devices such as wireless earbuds can be configured to perform broadband operation.

According to the present disclosure, the current formed in a conductive pattern of the antenna provided in the wireless earbud can be transferred coupled to a touch sensor through coupling, thereby increasing an operational bandwidth of the antenna.

While the wireless earbud is worn on a user's ear, the resonance frequency of the antenna may change due to the user's movement and the movement of the wireless earbud within the cavity in the user's ear. According to the present disclosure, a wireless signal can be reliably received even under such conditions.

According to the present disclosure, a change in antenna performance, which is caused by the limited space available for arranging the antenna inside the mechanism of the wireless earbud, can be minimized. Consequently, wireless communication performance can be reliably maintained.

According to the present disclosure, an antenna structure can be implemented that is capable of operating in a Bluetooth frequency band and a UWB band. This operation is enabled through a conductive pattern arranged on the front surface of a dielectric structure inside the wireless earbud, and a conductive pattern having a force sensor arranged on a lateral surface of the dielectric structure.

According to the present disclosure, an antenna structure can be implemented that is capable of operating in the Bluetooth frequency band and the UWB band through one or more slot regions. These slot regions are formed on the conductive pattern having the force sensor arranged on the lateral surface of the dielectric structure, and on the conductive pattern arranged on the front surface of the dielectric structure.

Further scope of applicability of the present disclosure will become apparent from the following detailed description. However, various alterations and modifications to the present disclosure would be readily understood by a person of ordinary skill in the art without departing from the scope of the appended claims. The detailed description and specific embodiments, such as preferred embodiments of the disclosure, should be understood as illustrative examples only.

### Brief Description of Drawings

FIG. 1 is a block diagram illustrating a configuration of an exemplary system that includes an electronic device wirelessly communicating with a wearable electronic device, such as a wireless earbud, according to the present disclosure.
FIGS. 2 and 3 are perspective views that illustrate an earbud according to the present disclosure, as viewed from the front and rear, respectively.
FIGS. 4A and 4B are views illustrating configurations in which conductive patterns and mechanical structures are arranged inside the earbud according to the present disclosure, as viewed from different perspectives, respectively.
FIG. 5A is a graph illustrating a comparison of the frequency-varying characteristics of the reflection coefficient of the earbud, inside which a radiator structure in FIGS. 4A and 4B is arranged, with characteristics of the reflection coefficient of a radiator structure having a single conductive pattern.
FIGS. 5B and 5C are sets of graphs illustrating changes in the reflection coefficient that result from changes in the shapes of an RF cable and an FPCB in single-mode and dual-mode antenna structures.
FIG. 6 is a view illustrating the radiator structure formed by a plurality of conductive patterns inside the earbud according to the present disclosure.
FIG. 7 is a set of views illustrating the lateral and front surfaces of the radiator structure in FIG. 6.
FIG. 8 is a combination of a view illustrating the radiator structure implemented as a first conductive pattern, in which a slot region including a multiplicity of slot portions is formed, and a graph illustrating the reflection coefficient.
FIG. 9A is a view illustrating a structure obtained by forming one slot region in the radiator structure in FIG. 6.
FIG. 9B is a view illustrating a structure obtained by forming a plurality of slot regions in the radiator structure in FIG. 6.
FIG. 10A is a view illustrating the frequency band-varying characteristics of the reflection coefficient in the radiator structure in FIG. 9A. FIG. 10B illustrates the frequency band-varying characteristics of the reflection coefficient in the radiator structure in FIG. 9B.
FIG. 11 is a view illustrating the single-mode antenna and the mechanical structure inside the earbud.
FIG. 12 is a view illustrating the dual-mode antenna and the mechanical structure inside the earbud according to the present disclosure.
FIG. 13 is a combination of side, perspective, and front views illustrating the earbud in which the conductive pattern formed to have a single slot structure is arranged.
FIG. 14 is a combination of side, perspective, and front views illustrating the earbud in which the conductive pattern formed to have a multi-slot structure is arranged.
FIG. 15 is a set of views illustrating a comparison between current distributions in the radiator structures configured as the single-slot structure and the multi-slot structure.

### Mode for the Invention

Embodiments disclosed in the present specification will be described in detail below with reference to the accompanying drawings. The identical or similar constituent elements are represented by the same reference numerals, and redundant descriptions thereof are not omitted. The terms 'module' and 'unit' are hereinafter used interchangeably or separately to refer only to a constituent element for convenience of description in the present specification. They are not intended to imply different meanings or to depict different functions. In addition, when describing the embodiments disclosed in the present specification, a detailed description of a well-known related technology may be omitted if it is deemed that such a description would obscure the nature and gist of the present disclosure. In addition, the accompanying drawings are provided solely to facilitate understanding of the embodiments disclosed in the present specification. The technical idea disclosed in the present specification should not be construed as limited to the accompanying drawings.

The ordinal numbers first, second, and so forth may be used to describe various elements, but they do not limit these elements. These terms are used solely to distinguish one element from another.

It should be understood that a constituent element, when referred to as 'being connected to' or 'having access to' a different constituent element, may be directly connected to or have direct access to the different constituent element, or may be indirectly connected to or have access to the different constituent element through one or more intermediate constituent elements. Likewise, it should be understood that a constituent element, when referred to as 'directly connected to' or 'having direct access to' a different constituent element, may be connected to or have access to the different constituent element without any intervening constituent element.

A noun in singular form, unless clearly indicated otherwise by the context, shall be understood to include the plural form.

The terms 'include,' 'have,' and equivalent expressions, as used in the present application, shall be understood to indicate the presence of a feature, number, step, operation, constituent element, component, or combination thereof, without precluding the possibility of the presence or addition of one or more other features, numbers, steps, operations, constituent elements, components, or combinations thereof.

An electronic device described in the present specification may be a wearable device. Wireless wearable electronic devices, such as wireless earbuds, may communicate with a host device and may also communicate with each other. In this type of arrangement, any suitable types of host electronic devices and wearable wireless electronic devices may be used. In the present specification, by way of example, the use of wireless hosts, such as cellular telephones, computers, or wristwatches, may be described in certain contexts. In addition, any suitable wearable wireless electronic device may wirelessly communicate with a wireless host. The use of a wireless earbud for communication with the wireless host is provided by way of example only.

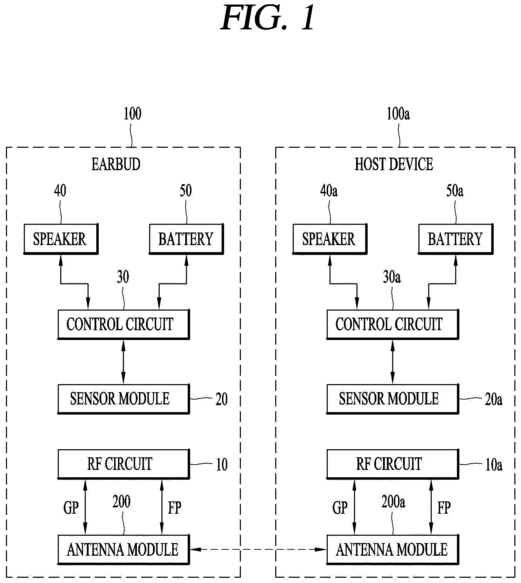

A wireless electronic device host may wirelessly communicate with accessory devices, such as earbuds. In this regard, FIG. 1 is a block diagram illustrating a configuration of an exemplary system that includes an electronic device wirelessly communicating with a wearable electronic device, such as a wireless earbud, according to the present disclosure.

With reference to FIG. 1, a host electronic device 100a may be a mobile terminal capable of performing wireless communication or a wearable device different from the wireless earbud and is not limited thereto. The host electronic device 100a may be implemented as any suitable electronic device capable of performing wireless communication with the wireless earbud, or, by way of example, as one of the following: a computer, a laptop computer, a content reproduction device on a home network, or a vehicular communication device.

A wireless earbud 100 may be configured to include various constituent elements. In this regard, the wireless earbud 100 may be configured to include an antenna module 200, an RF circuit 10, and a sensor module 20. The wireless earbud 100 may be configured to further include a control circuit 30, a battery 40, and a speaker 50. The host electronic device 100a may be configured to include an antenna module 200a and an RF circuit 10a in order to perform wireless communication with the earbud 100. The host electronic device 100a may be configured to further include the sensor module 20, the control circuit 30, the battery 40, and the speaker 50, but is not limited thereto. The host electronic device 100a may be configured to include more constituent elements than the earbud 100.

The antenna module 200 may be configured to receive a wireless signal containing voice content from the host electronic device 100a. The antenna module 200 may be configured to receive a wireless signal in a Bluetooth band, for example, in a band ranging from 2.4 to 2.488 GHz, from the host electronic device 100a. In this regard, a wireless communication link between the host electronic device 100a and the earbud 100 is not limited to Bluetooth communication. Any suitable wireless communication link, for example, a short-range wireless communication link operating in a frequency band such as 2.4 GHz or 5 GHz, and capable of supporting short-range wireless communication between the host electronic device 100a and the earbud 100, may be used. Depending on the application, a wireless communication link in a mobile communication frequency band that supports IoT wireless communication, or a wireless communication link in a millimeter-wave band may also be used.

In addition, when a user's input is applied using an operation button provided on the earbud 100, a control command may be transferred to the host electronic device 100a through the antenna module 200 in such a manner as to control reproduction, sound volume, or another reproduction-related function associated with the voice content. The antenna module 200a of the host electronic device 100a may receive, in the Bluetooth band, a wireless signal containing the control command.

The antenna module 200 may be operatively coupled to the RF circuit 10. The antenna module 200 may be connected to a signal pattern on the RF circuit 10 through a feeding portion FP. The antenna module 200 may be connected to a ground pattern on the RF circuit 10 through a ground connection portion GP. The RF circuit 10 may be configured to amplify, filter, and process a signal transmitted through the antenna module 200 and a signal received therethrough.

The sensor module 20 may be configured to include at least one sensor. The sensor module 20 may be configured to include a proximity sensor capable of sensing the user's motion and proximity, a touch sensor capable of sensing the user's input, a pressure sensor, and another similar type of sensor, and is not limited thereto. The sensor module 20 may also further include an acceleration sensor, a gyro sensor, and another similar type of sensor.

The control circuit 30 may be operatively coupled to the sensor module 20, the battery 40, and the speaker 50. The control circuit 30 may be configured to control the respective operations of the sensor module 20, the battery 40, and the speaker 50.

The battery 40 may be configured to supply power to various electronic components arranged within the earbud 100. The battery 40 may be configured to store power when receiving power from a charger and to supply the stored power to various electronic components. The speaker 50 may be configured to reproduce voice content received from the host electronic device 100a.

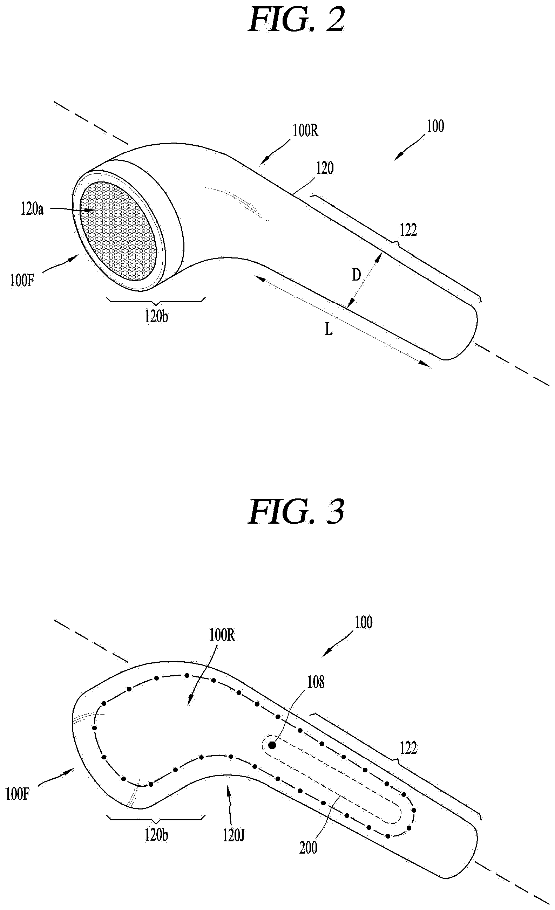

The earbud 100 according to the present disclosure may be configured to have a mechanical structure in the form of a housing and to include a port, such as a speaker port, formed on the outside of the mechanical structure. In this regard, the antenna module of the earbud 100, which is capable of receiving or transmitting a wireless signal, may be arranged within the housing. In this regard, FIGS. 2 and 3 are perspective views that illustrate the earbud according to the present disclosure, as viewed from the front and rear, respectively.

With reference to FIG. 2, which is the perspective view illustrating the earbud 100 as viewed from the front, the earbud 100 may be divided into a front surface 100F and a rear surface 100R along an axis interposed therebetween. A housing 120 includes a main body portion 120b in which a speaker port 120a is formed. The speaker port 120a may be formed to face the front surface of the earbud 100. An elongated protruding portion, such as a stalk portion 122 of the housing 120, extends outward from a main housing portion 120b. The stalk portion 122 may be formed as an elongated protruding portion having a predetermined length L and a predetermined diameter D.

The main body portion 120b may have a shape configured to be fitted within the user's ear. A speaker 20 may be mounted on the main body portion 120b and may be aligned with the speaker port 120a. The speaker 20 may be used to transmit sound into the ear canal of the user. The speaker port 120a may be formed by one or more openings in the housing 120. One or more mesh layers made of plastic or metal may be interposed between the housing 20 and one or more openings 120.

The housing 120 may be formed of metal, plastic, a carbon fiber composite material, other fiber composite materials, glass, ceramics, other suitable materials, or a combination thereof. An elongated shape of the stalk 122 enables the user to grip the earbud 100 with a hand while it is inside the ear. The stalk 122 may extend from the main body portion 120b at the rear side 100R of the housing 120 and may extend along a stalk axis 120 in a lengthwise direction. Depending on the application, the stalk 122 may also be formed in a predetermined curved shape rather than in a straight-line shape.

FIG. 3 is a perspective view illustrating the earbud 100 in FIG. 2, as viewed from the rear. As illustrated in FIG. 3, an antenna 200 may have an elongated shape extending along an axis that is parallel to the length of the stalk 122. The antenna 200 may be formed to extend from a feeder 108 to a lower region of the stalk 122, but is not limited to this configuration.

With reference to FIGS. 1 to 3, the antenna 200 may overlap structures such as a battery 50 and other conductive constituent elements positioned in an inner region 124 of the housing 120. These structures may be formed of a conductive material that has properties capable of interfering with the performance of the antenna 200.

The antenna feeder 108 may be positioned at a junction portion 12J of the housing 120 between the main body portion 120b and the stalk 122, rather than at a position overlapping a region 124 of the main body portion 120b. The antenna feeder may be arranged at a second position, such as a junction point 120J, rather than at a first position, such as a position on the main body portion 120b. This arrangement can contribute to minimizing not only unnecessary radiation, which occurs on another ground plane, but also power consumption. Minimizing unnecessary radiation and power consumption in this manner can result in a reduction in battery power consumption and an improvement in antenna efficiency.

The antenna 200 may be formed as a metal pattern or metal trace patterned on a printed circuit board (PCB). The PCB may be configured as a hard material board or as a flexible printed circuit board (FPCB) (for example, a printed circuit formed as a sheet of a polyimide board material or another polymer board material).

A configuration for performing wireless communication with an electronic device outside the earbud through a radiator arranged inside the earbud according to the present disclosure is described below. The external electronic device outside the earbud corresponds to the host electronic device 100a in FIG. 1, and the earbud corresponds to the earbud 100 in FIG. 1. The earbud may perform wireless communication with the host electronic device 100a through the antenna module 200. The earbud corresponds to a type of electronic device that receives content through wireless communication with the host electronic host. The earbud may be referred to as a component of a true wireless stereo (TWS) system. A radiator structure arranged inside the earbud that performs wireless communication with the host electronic device is described in detail.

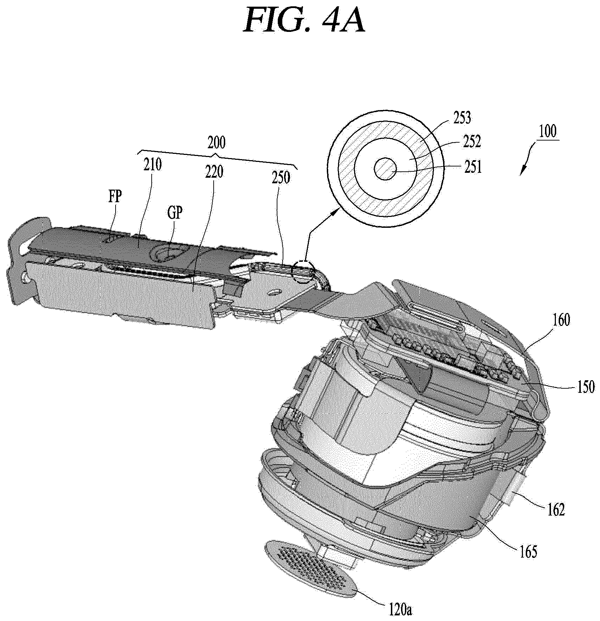

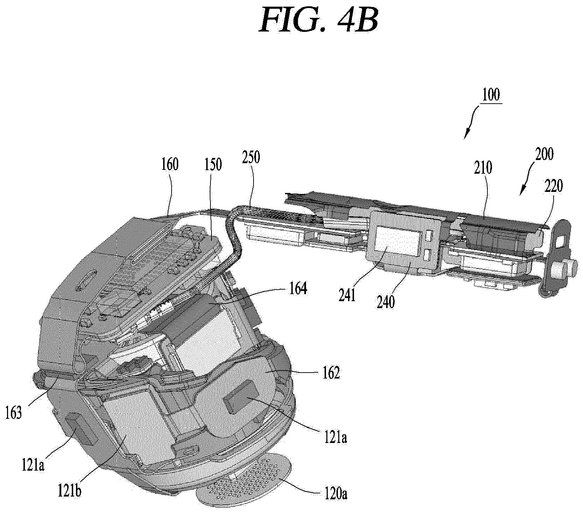

In this regard, FIGS. 4A and 4B are views illustrating configurations in which conductive patterns and mechanical structures are arranged inside the earbud according to the present disclosure, as viewed from different perspectives, respectively. With reference to FIG. 2 to FIG. 4B, the earbud 100 includes the housing 120, a radiator 200, and a printed circuit board (PCB) 150. The radiator 200 is configured to perform wireless communication with an electronic device outside the earbud 100 by radiating a wireless signal. The radiator 200 may be referred to as the antenna 200 because it transmits and receives wireless signals.

The housing 120 includes the main body portion 120b, which has the speaker port 120a, and the stalk 122 that extends from the main body portion. The radiator 200 is arranged within the stalk 122 and configured to radiate a wireless signal toward the exterior of the earbud 100. The PCB 150 is electrically connected to the radiator.

The radiator 200 includes a first conductive pattern 210 and a second conductive pattern 220. The radiator 200 further includes a connection portion 250. The connection portion 250 is implemented as an RF cable, in the present embodiment, the connection portion is a coaxial cable, in other embodiments not part of the claimed subject-matter, the RF cable is not limited to a coaxial cable. The first conductive pattern 210 is formed on a first surface within the stalk 122. The second conductive pattern 220 is formed on a second surface perpendicular to the first surface within the stalk 122. The connection portion 250 electrically connects the first conductive pattern 210 and the PCB 150 to each other.

The first conductive pattern 210 and the connection portion 250 are configured to radiate a signal in a first frequency band. The first conductive pattern 210 and the second conductive pattern 220 are configured to radiate a signal in a second frequency band different from the first frequency band. For example, the second frequency band may be higher than the first frequency band, but is not limited thereto.

The connection portion 250 may be configured to include a signal line 251, a dielectric 252, and a ground 253, all of which are formed inside the connection portion 250. The connection portion 250 may be implemented as a coaxial cable that includes a signal line 251, a dielectric 252, and a ground 253, but is not limited thereto. The signal line 251 of the coaxial cable 250 may be connected to the first conductive pattern 210. The signal line 251 of the coaxial cable 250 may be connected to a feeding connection portion FP of the first conductive pattern 210. A ground 253 of the coaxial cable 250 may be connected to a ground of the PCB 150. The ground 253 of the coaxial cable 250 may be connected to the first conductive pattern 210. The ground 253 of the coaxial cable 250 may be connected to a ground connection portion GP of the first conductive pattern 210.

The ground 253 of the coaxial cable 250, which is horizontally arranged on the first conductive pattern 210, may operate as a radiator by radiating a first signal in the first frequency band. The ground 253 of the coaxial cable 250 may be arranged parallel to the first conductive pattern 210 in the lower region of the first conductive pattern 210.

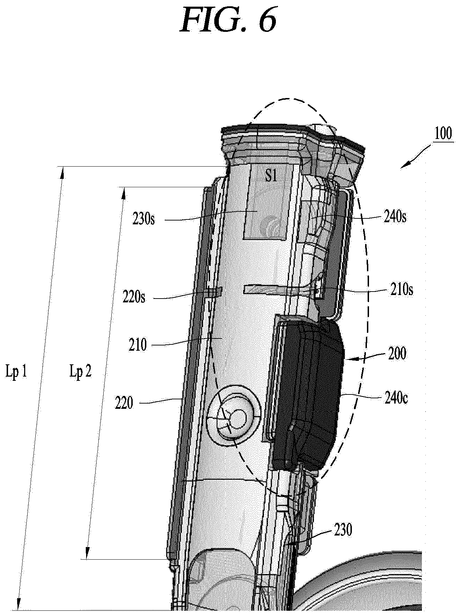

The second conductive pattern 220 may be configured to include a touch sensor. The first conductive pattern 210 and the second conductive pattern 220 may be formed to have a predetermined length on a substantially vertical surface. The first conductive pattern 210 may be formed to have a first length along a first axial direction of the stalk. The second conductive pattern 210 may be formed to have a second length along the first axial direction. The first length of the first conductive pattern 210 may be defined to fall within a predetermined range of lengths, with 14.6 mm serving as a reference value, but is not limited thereto. The second length of the second conductive pattern 210 may be defined to fall within predetermined range of lengths, with 13.6 mm serving as a reference value, but is not limited thereto. The radiator 200 further includes a fourth conductive pattern 240. The fourth conductive pattern 240 arranged on a third surface may be configured to include a force sensor 241. The fourth conductive pattern 240 in which the force sensor 241 is arranged may be arranged inside a dielectric casing 240c as illustrated in FIG. 6.

The first conductive pattern 210 and the coaxial cable 250 are configured to radiate a signal in the first frequency band. The second conductive pattern 220 may be configured to radiate a signal in the second frequency band, while the first conductive pattern 210 is configured to radiate a signal in the first frequency band. The first and second frequency bands are different from each other. The first frequency band may be a frequency band having a center frequency of 2.3 GHz to perform Bluetooth communication with an electronic device, but is not limited thereto. The second frequency band may be a frequency band having a center frequency of 2.6 GHz to perform Bluetooth communication, but is not limited thereto.

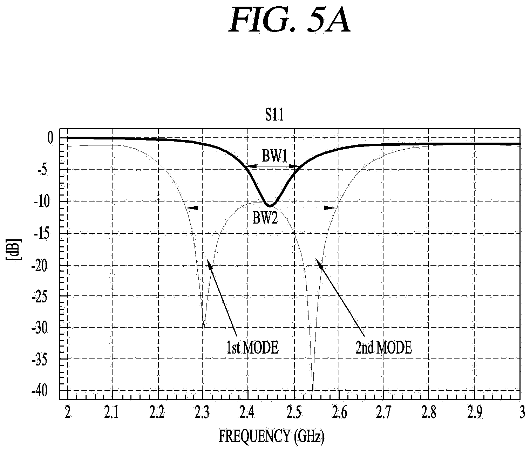

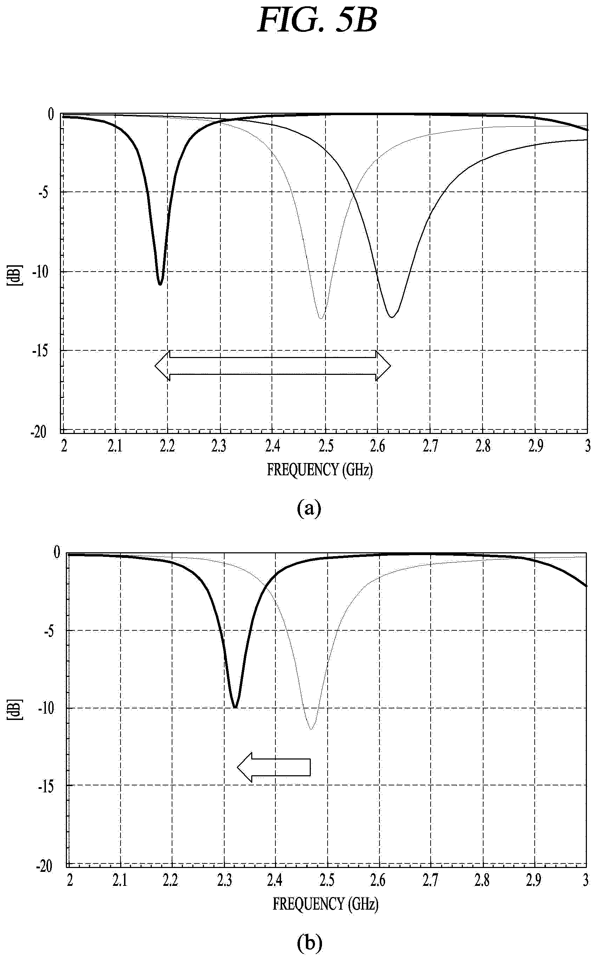

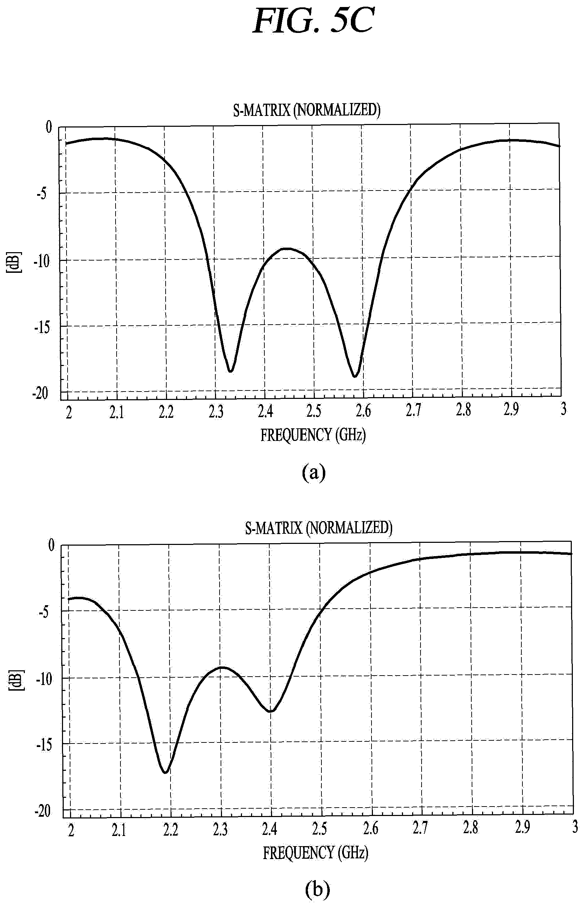

In this regard, FIG. 5A is a graph illustrating a comparison of the frequency-varying characteristics of the reflection coefficient of the earbud, inside which the radiator structure in FIGS. 4A and 4B is arranged, with the characteristics of the reflection coefficient of a radiator structure having a single conductive pattern. FIGS. 5B and 5C are sets of graphs illustrating changes in the reflection coefficient that result from changes in the shapes of an RF cable and an FPCB in single-mode and dual-mode antenna structures.

With reference to FIGS. 4A and 4B, the earbud may transmit and receive a wireless signal over a broadband frequency range, by virtue of the first and second conductive patterns 210 and 220 formed on a substantially vertical surface, and the coaxial cable 250 connected to the first conductive pattern 210. With reference to FIGS. 2 to 5A, the radiator 200, which has the first and second conductive patterns 210 and 220 and a connection portion 240, operates as an antenna having dual-resonance characteristics in the first and second frequency bands. In contrast, the radiator structure with the single conductive pattern operates as an antenna with single-resonance characteristics in a frequency band between the first and second frequency bands.

In this regard, the first conductive pattern 210 formed on the first surface and the coaxial cable 250 formed on the first surface are configured to radiate the first signal in the first frequency band. The first conductive pattern 210 and the second conductive pattern 220 formed on the second surface perpendicular to the first surface are configured to radiate a second signal in the second frequency band. For example, the first frequency band may be a 2.3 GHz band. The second frequency band may be higher than the first frequency band, but is not limited thereto. For example, the second frequency band may be a 2.55 GHz band or a 2.6 GHz band, but is not limited thereto.

The antenna structure inside the earbud according to the present disclosure may be formed as a structure in which flexible printed circuit boards (FPCBs), on which a plurality of electronic components can be arranged, are connected to each other. In this regard, an FPCB 160 arranged on the top of the PCB 150 may be configured to be connected to a second FPCB 162. A ground pattern on the FPCB 160 and a ground pattern on the second FPCB 162 may be connected to each other. A plurality of proximity sensors 121a may be provided on the lateral surface of the second FPCB 162, and a voice pickup unit (VPU) 121b may be arranged among the proximity sensors 121a. One end of a connection FPCB 164 may be configured to be connected to the PCB 150, while the other end may be configured to be connected to the FPCB 160.

With reference to FIG. 5A, the operational frequency of an antenna provided on the earbud, which performs wireless communication through Bluetooth, may be configured to fall within a predetermined bandwidth having a center frequency of 2.45 GHz. In this regard, an operational bandwidth BW1 of an antenna operating in a single frequency band may be set to approximately 100 MHz. A frequency band for wireless communication through Bluetooth may be set in a range from approximately 2.4 GHz to approximately 2.4835 GHz. The operational bandwidth BW1 of an antenna may be set to approximately 100 MHz, and may cover the frequency band used for Bluetooth wireless communication. However, deviations in the manufacturing process of the antenna arranged inside the earbud, or changes in antenna performance resulting from the earbud being fitted within the ear for use, may arise. Accordingly, there arises a problem in that it is difficult for an antenna having a bandwidth of approximately 100 MHz to find application in the earbud.

An operational bandwidth BW2 of the antenna according to the present disclosure, which operates in a multi-frequency band, may be set to approximately 400 MHz or greater. In this regard, the operational frequency of the antenna according to the present disclosure ranges from approximately 2.25 GHz to approximately 2.6 GHz, and a resulting operational bandwidth BW2 may be set to approximately 450 MHz. Therefore, the antenna according to the present disclosure, which has dual-band resonance characteristics, may find application in the earbud. In this regard, the earbud may be used reliably even when deviations arise in the manufacturing process of the antenna arranged inside the earbud arise or when changes arise in antenna performance resulting from the earbud being fitted within the ear for use.

Specifically, changes in antenna performance may arise from 1) deviations in the dielectric constant of the structure arranged inside the earbud, 2) deviations in the assembly of the structure arranged inside the earbud, and 3) deviations in the user environment during use of the earbud. For example, a deviation of approximately 5% to approximately 10% in permittivity may give rise to a deviation of approximately 45 MHz to approximately 90 MHz in the resonance frequency of the antenna. Deviations in the assembly, which may occur due to a flexible circuit board arranged inside the earbud, may be greater than deviations in the assembly of other components. For example, a deviation of approximately 170 MHz in the resonance frequency of the antenna may occur due to errors in the shape and arrangement of the assembled FPCB. Therefore, in the present specification, there is proposed a broadband antenna structure arranged inside the earbud, which has a bandwidth of approximately 400 MHz or greater. To this end, in the present specification, there is proposed a dual-mode broadband antenna structure that operates in a first mode in the first frequency band corresponding to a low-frequency band and in a second mode in the second frequency band corresponding to a high-frequency band.

In the antenna structure inside the earbuds as illustrated in FIGS. 4A and 4B, changes in the shapes of the FPCB and RF cable and usage environments thereof may give rise to a change in antenna performance. In this regard, FIG. 5B is a set of graphs illustrating the changes in the reflection coefficient that result from the changes in the shapes of the RF cable and the FPCB, in a single-mode antenna structure in which only the first conductive pattern inside the earbud in FIGS. 4A and 4B is formed. FIG. 5C is a set of graphs illustrating the changes in the reflection coefficient that result from the changes in the shapes of the RF cable and the FPCB, in the dual-mode antenna structure that includes the first conductive pattern and the second conductive pattern that are connected to the RF cable inside the earbud in FIGS. 4A and 4B.

With reference to FIGS. 4A and 4B and (a) of FIG. 5B, the resonance frequency of a single-mode antenna may change from a frequency lower than 2.2 GHz to a frequency higher than 2.6 GHz, depending on the shape deformation and movements of the FPCBs 160 and 162. In this regard, the resonance frequency may change by approximately 0.4 GHz due to the shape deformation and movements of the FPCBs 160 and 162. With reference to FIGS. 4A and 4B and (b) of FIG. 5B, the resonance frequency of the single-mode antenna may change from approximately 2.45 GHz to a lower frequency of 2.3 GHz, depending on the shape deformation and movement of the RF cable 240. In this regard, the resonance frequency may change by approximately 0.2 GHz due to the shape deformation and movement of the RF cable 240. Therefore, taking into consideration the shape deformation and movements of the RF cable 240 and the FPCBs 160 and 162, the resonance frequency of the single-mode antenna may change by approximately 0.6 GHz (= 0.4 GHz + 0.2 GHz).

With reference to FIGS. 4A and 4B and (c) of FIG. 5C, a dual-mode antenna 200 may be designed to exhibit dual resonance in the approximately 2.3 GHz band and approximately 2.6 GHz band. With reference to FIGS. 4A and 4B and (b) of FIG. 5C, the operational band of the antenna changes to approximately 2.2 GHz and approximately 2.4 GHz, depending on the shape deformation and movements of the RF cable 240 and FPCBs 160 and 162. Therefore, even when the shape deformation and movements of the RF cable 240 and FPCBs 160 and 162 are all considered, the dual-mode antenna 200 exhibits a smaller change in resonance frequency than the single-mode antenna. In the first and second frequency bands, in addition to a radiation-contributing component resulting from the first conductive pattern 210, radiation-contributing components resulting from the connection portion and other conductive patterns are present in the dual-mode antenna 200. Therefore, the dual-mode antenna 200 exhibits a smaller change in resonance frequency that results from other environmental changes, for example, the shape deformation and movements of the cable 240 and the FPCBs 160 and 162, than the single-mode antenna.

Even in the case of a broadband operation such as that performed in the dual-mode antenna 200, it is necessary to minimize the changes in resonance frequency that result from the shape deformation and movement of a connection structure. To minimize the change in resonance frequency that results from the shape deformation and movements of the FPCBs 160 and 162, the FPCBs 160 and 162 may be attached to a cradle structure such as a metal frame 165 using adhesive tape. To minimize the change in resonance frequency that results from the shape deformation and movement of the RF cable 240, a guide structure may be installed to guide the RF cable 240.

The radiator structure arranged inside the earbud according to the present disclosure also needs to operate in the frequency band for ultra-wide band (UWB) communication, in addition to the Bluetooth frequency band. In this regard, the wireless earbud may be designed to receive a wireless signal through the Bluetooth frequency band that has a predetermined bandwidth having a center frequency of approximately 2.45 GHz. In this regard, the operational bandwidth of the antenna provided in the wireless earbuds needs to be designed broader than the operational bandwidths of other electronic devices that perform wireless communication through the Bluetooth frequency band. The reason for this is that the resonance frequency of the antenna changes due to a user's movement when the user wears the wireless earbud or due to the movement of the wireless earbud within the user's ear canal. In addition, since the space available for arranging the antenna inside the mechanism of the wireless earbud is limited, the antenna performance may become susceptible to manufacturing deviations. Accordingly, there is a need to implement an electronic device, such as a wireless earbud, which is equipped with an improved antenna and a control circuit.

In addition, in densely populated areas, an industry-science-medical (ISM) band, such as the Bluetooth frequency band, may experience temporary degradation in signal quality, which in turn may lead to a temporary reduction in reproduction quality when reproducing content. To address this issue, content may be reproduced by receiving a wireless signal through Wi-Fi and/or ultra-wide band (UWB). An issue arises in that it is difficult to implement an antenna structure capable of operating in both the Bluetooth frequency band and the UWB frequency band within the limited internal space inside the mechanical structure of the wireless earbud. In this regard, the antenna structure (radiator structure) needs to be implemented to cover a frequency band ranging from 6.25 GHz to 8.25 GHz. The antenna structure needs to be implemented to cover a frequency band of 6.25 GHz to 10 GHz for UWB communication services across various wireless channels. In addition, the antenna structure needs to be implemented within a unibody mechanical structure to resonate in the Bluetooth frequency band and the UWB frequency band.

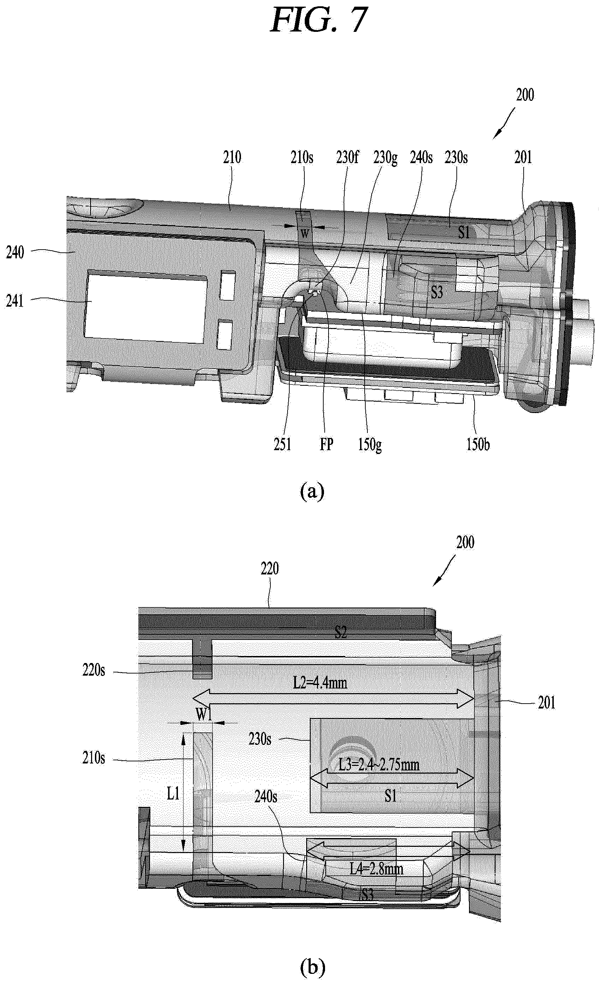

In this regard, FIG. 6 is a view illustrating the radiator structure formed by a plurality of conductive patterns inside the earbud according to the present disclosure. The conductive patterns forming the radiator structure in FIG. 6 may have one or more slot regions. FIG. 7 is a set of views illustrating the lateral and front surfaces of the radiator structure in FIG. 6. (a) of FIG. 7 illustrates the lateral surface of the radiator structure in FIG. 6, and (b) of FIG. 7 illustrates the front surface, on which the slot regions are formed, of the radiator structure in FIG. 6.

With reference to FIGS. 2 to 4B, FIG. 6, and FIG. 7, the earbud 100 according to the present disclosure is described. The earbud 100 includes the housing 120, the printed circuit board (PCB) 150, a dielectric structure 201, and the radiator 200. The dielectric structure 201 may be formed by injecting dielectric material, and the radiator 200, which is implemented as a plurality of conductive patterns, may be referred to as an antenna.

The housing 120 includes the main body portion 120b having the speaker port 120a, and the stalk 122 extending from the main body portion 120b. The dielectric structure 201 is arranged inside the stalk 122. The dielectric structure 201 is formed to include the front surface, the rear surface, and the lateral surfaces. The front surface of the dielectric structure 201 may be referred to as the first surface, and one lateral surface and the other lateral surface of the dielectric structure 201 may be referred to as the second surface and the third surface, respectively. The radiator 200 is formed on the dielectric structure 201 and may be configured to radiate a wireless signal toward the exterior of the earbud 100. The PCB 150 is electrically connected to the radiator 200.

The radiator 200 may be configured to include a plurality of conductive patterns. The radiator 200 includes the first conductive pattern 210 and the second conductive pattern 220 and may thus operate in the first and second frequency bands that correspond to the Bluetooth bands. The radiator 200 includes the first conductive pattern 210, the second conductive pattern 220, and the fourth conductive pattern 230 and may thus operate in the UWB band in addition to the Bluetooth band. The radiator 200 includes the first and fourth conductive patterns 210 and 240, and may thus operate in the UWB band in addition to the Bluetooth band. The radiator 200 can operate not only in the Bluetooth band but also in the UWB band through the first to fourth conductive patterns 210 to 240 and a slot region 210s.

The first conductive pattern 210 is formed on the first surface S1 of the dielectric structure 201. The first conductive pattern 210 may be formed on the second surface S2 perpendicular to the first surface S1 of the dielectric structure 201. The coaxial cable 250 electrically connects the first conductive pattern 210 and the PCB 150 to each other. A third conductive pattern 230 is formed on the third surface S3, which is perpendicular to the first surface S1 of the dielectric structure 201 and faces the second surface S2. The third conductive pattern 230 may be connected to the first conductive pattern 210 and may thus form a first radiation structure that operates in the first frequency band of the radiator 200. The third conductive pattern 230 includes a feeding connection pattern 230f and a ground connection pattern 230g. The third conductive pattern 230 is connected to the first conductive pattern 210 and may thus form a second radiation structure that operates in the second frequency band of the radiator 200, together with the second conductive pattern 220 spaced from the first conductive pattern 210.

The fourth conductive pattern 240 is arranged on the third surface S3 of the dielectric structure 201. The fourth conductive pattern 240 may be arranged adjacent to the feeding connection pattern 230f of the third conductive pattern 230. The slot region 210s is formed by removing at least one region of the first conductive pattern 210 on the first surface S1 of the dielectric structure 201 and the third conductive pattern 230 on the third surface S3 of the dielectric structure 201.

The first conductive pattern 210 and the coaxial cable 250 are configured as the first radiation structure to radiate a signal in the first frequency band. The first conductive pattern 210 and the second conductive pattern 220 are configured as the second radiation structure to radiate a signal in the second frequency band different from the first frequency band. In this regard, the first conductive pattern 210 on the first surface S1 of the dielectric structure 210 may be integrally formed with the third conductive pattern 230 on the third surface S3 of the dielectric structure 201. The fourth conductive pattern 240 and the slot region 210a is configured as a third radiation structure to radiate a signal in a third frequency band, which is broader than the first and second frequency bands.

The slot region 210s may be formed between the feeding connection pattern 230f and the ground connection pattern 230g. The slot region 210s may be formed to have a first length L1 on one axis on the first surface S1 of the dielectric structure 201 and a first width W1 on the other axis. The feeding connection pattern 230f of the third conductive pattern 230 may be connected to the signal line 251 of the coaxial cable 250. The ground connection pattern 230g of the third conductive pattern 230 may be connected to a ground structure 150g of a second PCB 150b. The coaxial cable 250 may be arranged under the dielectric structure 201. The second PCB 150b may be arranged under the dielectric structure 201.

The radiator 200 of the earbud 100 may be configured with a plurality of conductive patterns and a plurality of slot regions. In this regard, the radiator 200 may be configured to include two or more of the following slot regions: the slot region 210s, a second slot region 220s, a third slot region 230s, or a fourth slot region 240s.

The second slot region 220s may be formed at the same point on one axis as the slot region 210s. The third slot region 230s may be formed on the first surface S1 of the dielectric structure 201 such that the third slot region is spaced apart from the slot region 210s on the other axis. The fourth slot region 240s may be formed on the first surface S1 and the third surface S3 of the dielectric structure 201 such that the fourth slot region 240s is spaced apart from the slot region 210s on the other axis.

The first slot region 210s and the second slot region 220s may be formed such that the first slot region 210s and the second slot region 220s are spaced apart, by a second length L2 in the direction of the other axis, from an end of the first conductive pattern 210 adjacent to the end of the stalk 122. The second length L2 from the end of the first conductive pattern 210 to an end of one side of the first slot region 210s and an end of one side of the second slot region 220s may be defined to fall within a predetermined range of lengths, with 4.4 mm serving as a reference value.

The length of the third slot region 230s may be defined as a third length L3, which is shorter than the second length L2, in the direction of the other axis. The third length L3 to an end of one side of the third slot region 230s may be defined to fall within a range of 2.4 mm to 2.75 mm. The length from one end of the fourth slot region 240s to the end of the first conductive pattern 210s may be defined as a fourth length L4, which is shorter than the second length L2, in the direction of the other axis. The fourth length L4 to an end of one side of the fourth slot region 240s may be defined to fall within a predetermined range of lengths, with 2.8 mm serving as a reference value.

The first conductive pattern 210 may be formed to have a first pattern length Lp1 along a first axial direction of the stalk. The second conductive pattern 220 may be formed to have a second pattern length Lp2 along the first axial direction of the stalk. The signal line 251 of the coaxial cable 250 may be connected to the first conductive pattern 210. The ground 253 of the coaxial cable 250 may be connected to the ground of the PCB 150. The first conductive pattern 210 and the coaxial cable 250 may be configured to radiate a signal in the first frequency band. The first conductive pattern 210 and the second conductive pattern 220 may be configured to radiate a signal in the second frequency band different from the first frequency band.

The first pattern length Lp1 of the first conductive pattern 210 may be defined to fall within a predetermined range of lengths, with 14.6 mm serving as a reference value, but is not limited thereto. The second pattern length Lp2 of the second conductive pattern 210 may be defined to fall within a range of lengths from 8 mm to 14.6 mm, but is not limited thereto. The second pattern length Lp2 of the second conductive pattern 210 may be defined to fall within a predetermined range of lengths, with 13.6 mm serving as a reference value, but is not limited thereto. The first frequency band may be set as a frequency band having a center frequency of 2.3 GHz to perform Bluetooth communication with an electronic device. The second frequency band may be set as a frequency band having a center frequency of 2.6 GHz to perform Bluetooth communication.

The fourth conductive pattern 240 formed on the third surface S3 of the dielectric structure 201 facing the second conductive pattern 220 may include the force sensor 251 or a pressure sensor. The fourth conductive pattern 240 may be arranged between an end of the other side of a sub-pattern 231 of the third conductive pattern 230 and an end of one side of the feeding connection pattern 230f. The sub-pattern 231 of the third conductive pattern 230 and the feeding connection pattern 230f may be formed on the third surface S3 of the dielectric structure 201.

The third conductive pattern 230 arranged on the third surface S3 of the dielectric structure 201 may be formed in an optimal shape, taking into consideration the operational frequency band of the radiator 200. The third conductive pattern 230 may be configured to include the sub-pattern 231, the feeding connection pattern 230f, and the ground connection pattern 230g. The third conductive pattern 230 may be configured to include the sub-pattern 231, a second sub-pattern 232, the feeding connection pattern 230f, and the ground connection pattern 230g.

The sub-pattern 231 of the third conductive pattern 230 may be arranged to be spaced apart from an end of one side of the fourth conductive pattern 240. The feeding connection pattern 230f of the third conductive pattern 230 may be arranged to be spaced apart from an end of the other side of the fourth conductive pattern 240. The feeding connection pattern 230f of the third conductive pattern 230 may be connected to a feeding terminal or signal pattern of the PCB 150. The ground connection pattern 230g of the third conductive pattern 230 may be arranged to be spaced apart from the feeding connection pattern 230f by the slot region 210s. The slot region 210s may be formed between the feeding connection pattern 230f and the ground connection pattern 230g of the third conductive pattern 230.

The second sub-pattern 232 of the third conductive pattern 230 may be arranged to be spaced apart from the ground connection pattern 230g by the fourth slot region 240s. The fourth slot region 240s may be formed between the ground connection pattern 230g of the third conductive pattern 230 and the second sub-pattern 232.

The third conductive pattern 230 and the slot region 210s, which are formed on the third surface S3 of the dielectric structure 201, may be configured to radiate a signal in the third frequency band broader than the second frequency band. The third conductive pattern 230 and the slot region 210s may be configured to exhibit dual resonance in 7 GHz and 10 GHz bands for UWB communication.

The radiator 200 of the earbud according to the present disclosure may form a plurality of slot regions, thereby broadening the frequency band for UWB communication. In this regard, the third conductive pattern 230 formed on the third surface S3 of the dielectric structure 201 and a plurality of slot regions formed on the first and third conductive patterns 210 and 230 may be configured to radiate a signal in the third frequency band broader than the second frequency band. The third conductive pattern 230, the slot region 210s, the second slot region 220s, the third slot region 230s, and the fourth slot region 240s may be configured to radiate a signal in the third frequency band.

The third conductive pattern 230, the slot region 210s, the second slot region 220s, the third slot region 230s, and the fourth slot region 240s may be configured to exhibit multi-resonance in a frequency band from 6 GHz to 10 GHz for UWB communication.

The coaxial cable 250 may be configured to include the signal line 251, the dielectric 252, and the ground 253 that are formed inside the coaxial cable 250. The signal line 251 of the coaxial cable 250 may be connected to the first conductive pattern 210. The signal line 251 of the coaxial cable 250 may be connected to the feed connection portion FP of the first conductive pattern 210. The ground 253 of the coaxial cable 250 may be connected to the ground of the PCB 150. The ground 253 of the coaxial cable 250 may be connected to one point on the first conductive pattern 210. The ground 253 of the coaxial cable 250 may be connected to the ground connection portion GP of the first conductive pattern 210.

The ground 253 of the coaxial cable 250, which is arranged horizontally on the first conductive pattern 210, may operate as a radiator by radiating the first signal in the first frequency band. The ground 253 of the coaxial cable 250 may be arranged parallel to the first conductive pattern 210 in the lower region of the first conductive pattern 210.

The second conductive pattern 220 may be configured to include the touch sensor. The first conductive pattern 210 and the second conductive pattern 220 may be formed to have predetermined lengths on a substantially vertical surface. The first conductive pattern 210 may be formed to have the first length along the first axial direction of the stalk. The second conductive pattern 210 may be formed to have the second length along the first axial direction. The first length of the first conductive pattern 210 may be defined to fall within a predetermined range of lengths, with 14.6 mm serving as a reference value, but is not limited thereto. The second length of the second conductive pattern 210 may be defined to have a length within a predetermined range of lengths, with 13.6 mm serving as a reference value, but is not limited thereto.

As described above, the first conductive pattern 210 and the coaxial cable 250 may be configured to radiate the first signal in the first frequency band. The first conductive pattern 210 and the second conductive pattern 220 may be configured to radiate a signal in the second frequency band different from the first frequency band. The first frequency band may be a frequency band having a center frequency of 2.3 GHz to perform Bluetooth communication with an electronic device. The second frequency band may be a frequency band having a center frequency of 2.6 GHz to perform Bluetooth communication. The fourth conductive pattern 240 and the slot region 210a may be configured to radiate a signal in the third frequency band that is broader than the first and second frequency bands. The third frequency band may be configured to include a 6 GHz band, a 7 GHz band, or a 10 GHz band for UWB communication.

The first conductive pattern 210 formed on the first surface S1 of the dielectric structure 201 and the coaxial cable 250 formed on the first surface S1 may be configured to radiate the first signal in the first frequency band. The first conductive pattern 210 and the second conductive pattern 220 formed on the second surface S2 perpendicular to the first surface S1 may be configured to radiate the second signal in the second frequency band. The first conductive pattern 210 and the second conductive pattern 220 may be formed such that an end of one side of the first conductive pattern 210 and an end of one side of the second conductive pattern 220 are spaced apart from each other. A current formed in the first conductive pattern 210 may be coupled to the second conductive pattern 220 in the second frequency band.

First and second currents may be generated in the first and second conductive patterns 210 and 220, respectively. A first direction of the first current formed in the first conductive pattern 210 and the coaxial cable 250 on the first surface may be set to be orthogonal to a second direction of the second current formed in the second conductive pattern 220 on the second surface perpendicular to the first surface. In this regard, the first direction of the first current formed in the first surface may be the X-axis or Y-axis direction on the first conductive pattern 210. Likewise, the second direction of the second current formed in the second surface may be the Z-axis direction on the second conductive pattern 220. Accordingly, the radiator 200 may perform broadband operation in the first frequency band and the second frequency band.

A signal pattern of the first conductive pattern 210 may be formed as a conductive pattern in a predetermined shape to radiate a signal in the first frequency band and the second frequency band. A ground pattern of the first conductive pattern 210 may be electrically connected to the ground of the coaxial cable 250. A signal pattern of the second conductive pattern 220 may be formed in a predetermined shape to radiate a signal in the second frequency band and to operate as the touch sensor. A ground pattern of the second conductive pattern 220 may be electrically connected to the ground of the coaxial cable 250. A signal pattern of the fourth conductive pattern 240 may be formed as a conductive pattern in a predetermined shape to operate as a force sensor. Alternatively, the force sensor 241 may be arranged on a substrate, and the fourth conductive pattern 240 may be formed on the front surface of the substrate. A ground pattern of the fourth conductive pattern 240 may be electrically connected to the ground of the coaxial cable 250.

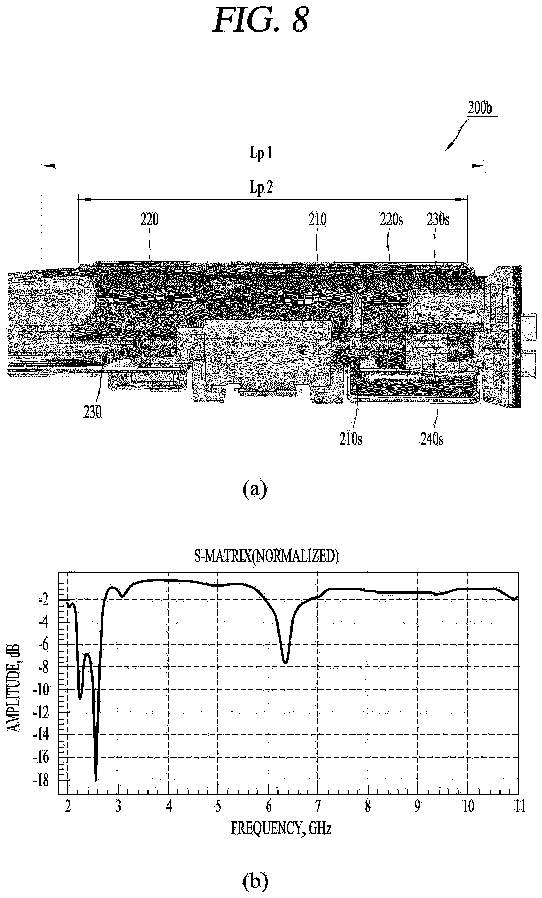

The radiator 200 provided in the earbud according to the present disclosure may also be implemented to include the first conductive pattern 210, in which the slot region 210a including a multiplicity of slot portions is formed, and a conductive pattern connected to the first conductive pattern 210. In this regard, FIG. 8 is a combination of a view illustrating a radiator structure implemented as the first conductive pattern, in which the slot region including a multiplicity of slot portions is formed, and a graph illustrating the reflection coefficient.

Unlike the radiator 200 in FIGS. 6 to 7B, a radiator 200b in (a) of FIG. 8 may be implemented as the first conductive pattern 210, in which the slot region 210s including a multiplicity of slot portions is formed. With reference to FIG. 6 to (a) of FIG. 8, the radiator 200b may include the first conductive pattern 210, the second conductive pattern 220 including the touch sensor, and the third conductive pattern 230 connected to the first conductive pattern 210. The radiator 200b may be implemented without including the fourth conductive pattern 240 in which the force sensor 241 is arranged. In this regard, even when a conductive pattern and slot region for a UWB radiator are present in a structure without a force sensor, a resonance point may not be present in the UWB band. In addition, even when a force sensor is present, if a conductive pattern and a slot region for the UWB radiator are not present, a resonant point may not be present in the UWB band.

With reference to FIG. 4A to (b) of FIG. 8, the first conductive pattern 210 and the coaxial cable 250 may be configured to radiate the first signal in the first frequency band. The first conductive pattern 210 and the second conductive pattern 220 may be configured to radiate a signal in the second frequency band different from the first frequency band. The slot regions 210s to 240s on the first conductive pattern 210 may be configured to radiate a signal in the third frequency band. However, the radiator 200b may not be configured to fully cover the entire frequency band for UWB communication, which is 6 GHz to 10 GHz or 7 GHz to 10 GHz, without the fourth conductive pattern 240 in which the force sensor 241 is arranged.

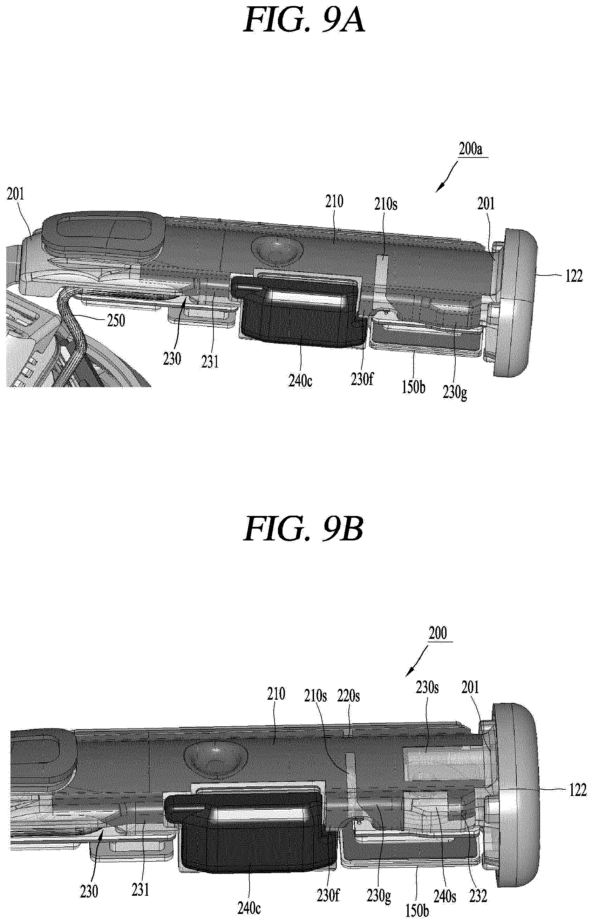

The number of slot regions on the radiator structure of the wireless earbud according to the present disclosure may be optimized for antenna performance. In this regard, FIG. 9A is a view illustrating a structure obtained by forming one slot region in the radiator structure in FIG. 6. FIG. 9B is a view illustrating a structure obtained by forming a plurality of slot regions in the radiator structure in FIG. 6.

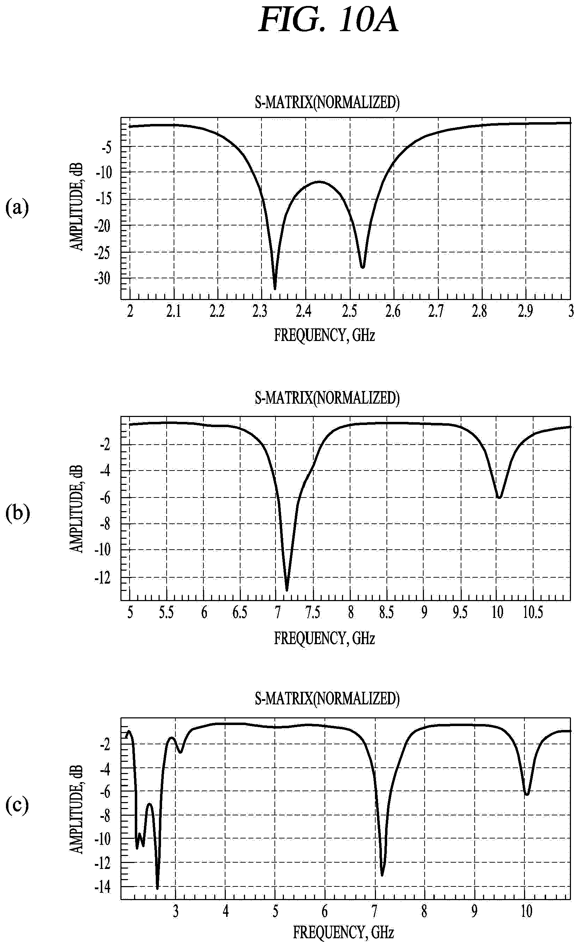

FIG. 10A is a view illustrating frequency band-varying characteristics of the reflection coefficient in the radiator structure in FIG. 9A. (a) of FIG. 10A is a view illustrating the characteristics of the reflection coefficient of the structure of the radiator 200a in the Bluetooth frequency band that includes the first and second frequency bands. (b) of FIG. 10A is a view illustrating the characteristics of the reflection coefficient of the structure of the radiator 200a in the UWB frequency band that includes the third frequency band. (c) of FIG. 10A is a view illustrating the characteristics of the reflection coefficient of the structure of the radiator 200a across the entire band that includes the first to third frequency bands.

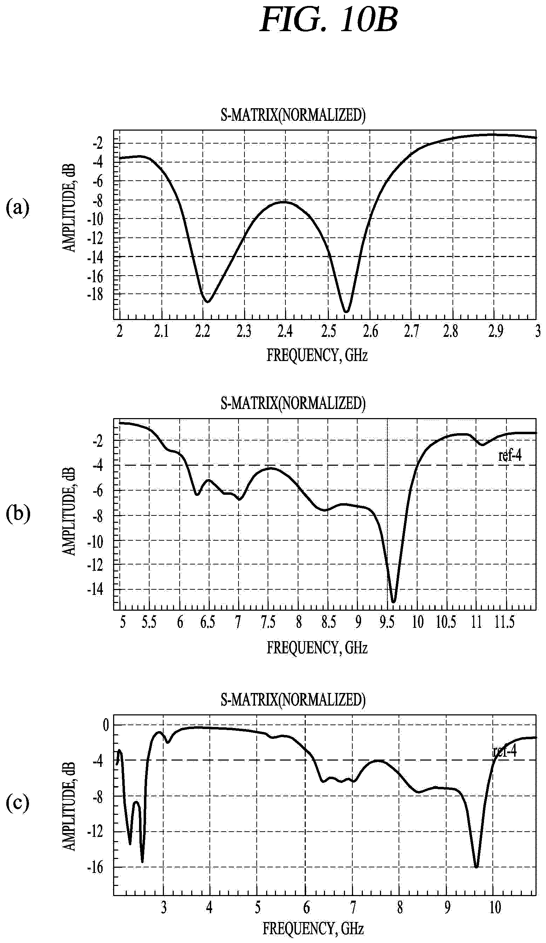

FIG. 10B is a view illustrating the frequency band-varying characteristics of the reflection coefficient in the radiator structure of FIG. 9B. (b) of FIG. 10A is a view illustrating the characteristics of the reflection coefficient of the structure of the radiator 200 in the Bluetooth frequency band that includes the first and second frequency bands. (b) of FIG. 10B is a view illustrating the characteristics of the reflection coefficient of the structure of the radiator 200 in the UWB frequency band that includes the third frequency band. (c) of FIG. 10B is a view illustrating the characteristics of the reflection coefficient of the structure of the radiator 200 in the entire frequency that includes the first to third frequency bands.

With reference to FIGS. 6, 7, and 9A, the radiator 200a includes the first conductive pattern 210 on which the first slot region 210s is formed, the second conductive pattern 220, the fourth conductive pattern 240, and the coaxial cable 250. The fourth conductive pattern 240 may be arranged inside the dielectric casing 241. With reference to FIGS. 6, 7, 9A, and 10A, the first conductive pattern 210 and the coaxial cable 250 are configured to radiate a signal in the first frequency band having a center frequency of 2.33 GHz. The first conductive pattern 210 and the second conductive pattern 220 are configured to radiate a signal in the second frequency band, the center frequency of which is 2.53 GHz. The fourth conductive pattern 240 and the first slot region 210s are configured to exhibit dual resonance in the third frequency band, thereby radiating a signal. In this regard, the fourth conductive pattern 240 and the slot region 210s may be configured to exhibit dual resonance at center frequencies of 7.2 GHz and 10 GHz.

With reference to FIGS. 6, 7, and 9B, the radiator 200 may be configured to include the first conductive pattern 210, the second conductive pattern 220, the fourth conductive pattern 240, and the coaxial cable 250. The first to fourth slot regions 210s to 240s are formed on the first to fourth conductive patterns 210 to 240, respectively. One portion of each of the first and fourth slot regions 210s may be formed on the third conductive pattern 230 connected to the first conductive pattern 210. With reference to FIGS. 6, 7, 9B, and 10B, the first conductive pattern 210 and coaxial cable 250 are configured to radiate a signal in the first frequency band having a center frequency of 2.2 GHz. The first conductive pattern 210 and the second conductive pattern 220 are configured to radiate a signal in the second frequency band having a center frequency of 2.55 GHz.

From FIGS. 9A and 9B, it can be seen that the force sensor operates as a source exciting the conductive pattern and the slot region that operates as a radiator in the UWB frequency band.

With reference to FIGS. 6, 7, and 9B, the fourth conductive pattern 240 and the first to fourth slot regions 210s to 240s are configured to exhibit multi-resonance in the third frequency band, thereby radiating a signal. The fourth conductive pattern 240 and the first to fourth slot regions 210s to 240s may be configured to exhibit dual resonance at frequencies of 6.3 GHz, 6.7 GHz, and 7.0 GHz. The fourth conductive pattern 240 and the first to fourth slot regions 210s to 240s may be configured to exhibit dual resonance at center frequencies of 8.5 GHz and 9.7 GHz. Therefore, as the number of slot regions increases, the number of multi-resonance points also increases, thereby expanding the operational frequency band of the radiator 200.

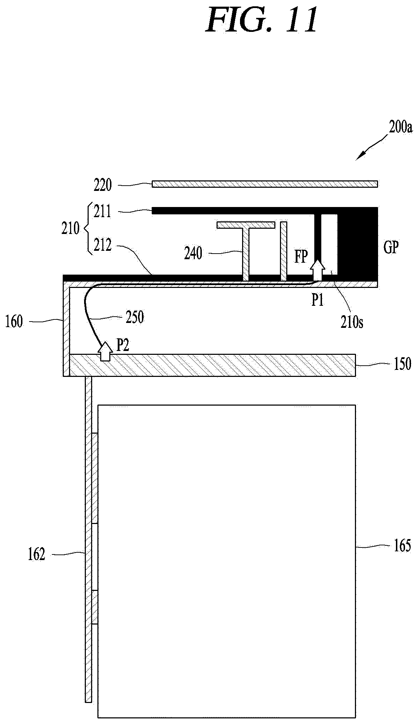

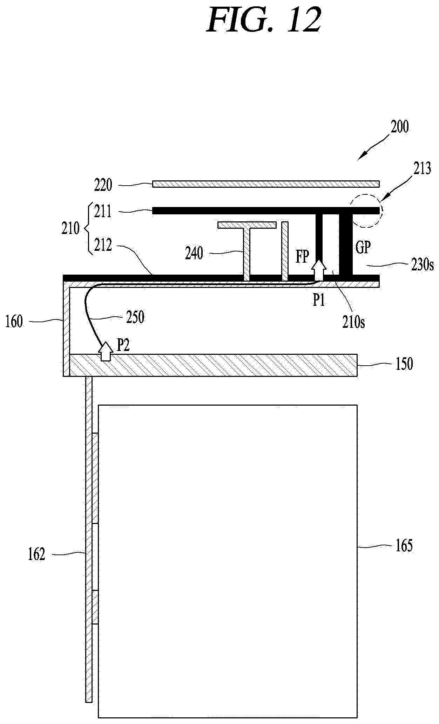

A plurality of conductive patterns constituting the radiator 200 of the earbud according to the present disclosure may be configured to be connected to the signal line and/or the ground. The radiator and the mechanical structure inside the earbud according to the present disclosure may be structured as illustrated in FIGS. 11 and 12.

In this regard, FIG. 11 is a view illustrating the single-mode antenna and the mechanical structure inside the earbud. FIG. 12 is a view illustrating the dual-mode antenna and the mechanical structure inside the earbud according to the present disclosure. In this regard, the single mode antenna may be configured to operate in the first and second frequency bands, which are the Bluetooth frequency bands. The dual-mode antenna may be configured to operate in the first and second frequency bands, which are the Bluetooth frequency bands, and in the third frequency band, which is the UWB frequency band.

With reference to FIG. 9A and 11, the radiator 200a, which operates in a single mode inside the earbud, may be configured to include the first conductive pattern 210 and the second conductive pattern 220, which is equipped with the touch sensor. The first conductive pattern 210 may be configured to include a signal pattern 211 and a ground pattern 212. The second conductive pattern 220 may be arranged to be spaced apart from the first conductive pattern 210 such that electromagnetic coupling is enabled between the first and second conductive patterns 210 and 220. One end portion of the coaxial cable 250, which is connected to the first conductive pattern 210, may be formed as a feeding connection portion FP and may be connected at a first position P1. The signal pattern 211 of the first conductive pattern 210 may be connected to the ground pattern 212 through the ground connection portion GP. The other end portion of the coaxial cable 250 connected to the PCB 150 may be connected at a second position P2.

The slot region 210s may be formed between the feeding connection portion FP and the ground connection portion GP. The radiator 200a operating in the single mode may be configured as the single-mode antenna that exhibits dual resonance in the first and second frequency bands, as illustrated in FIG. 10A. When the fourth conductive pattern 240 equipped with the force sensor is included, the fourth conductive pattern 240 and the slot region 210s on the radiator 200a may be configured to exhibit dual resonance at center frequencies of 7.2 GHz and 10 GHz.

With reference to FIGS. 9B and 12, the radiator 200, which operates in a dual mode inside the earbud, may be configured to include the first conductive pattern 210, the second conductive pattern 220 equipped with the touch sensor, the fourth conductive pattern 240 provided with the force sensor, and the slot regions 210s to 240s. The first conductive pattern 210 may be configured to include the signal pattern 211 and the ground pattern 212. The second conductive pattern 220 can be arranged to be spaced apart from the first conductive pattern 210 such that electromagnetic coupling is enabled between the first and second conductive patterns 210 and 220. One end portion of the coaxial cable 250 connected to the first conductive pattern 210 may be formed as the feeding connecting portion FP and may be connected at the first position P1. The signal pattern 211 of the first conductive pattern 210 may be connected through the ground pattern 212 and the ground connection portion GP. The other end portion of the coaxial cable 250 connected to the PCB 150 may be connected at the second position P2.

The pattern shape of one region of the first conductive pattern 210 may be implemented as the pattern shape of a UWB antenna having reduced ground effects. To this end, the slot region 230s may be formed in the first conductive pattern 210. The slot region 210s may be formed between the feeding connection portion FP and the ground connection portion GP. An end portion of the first conductive pattern 210 on which the slot region 230s is formed may form a sub-pattern 213 that operates as a radiator in the UWB frequency band.

As illustrated in FIG. 10B, the radiator 200 may be configured as the dual-mode antenna that exhibits dual resonance in the first and second frequency bands and exhibits multi-resonance in the third frequency band.

In the context of a UWB pattern configuration, a portion of a BT pattern may operate as a ground. In the context of a BT pattern configuration, a portion of a UWB pattern may operate as a ground. When tuning the BT pattern, a UWB antenna having a ground effect at or below a predetermined level may be applied to minimize a change to the UWB antenna. In this regard, UWB antenna pattering may be performed by removing one portion of the ground pattern 212 of the first conductive pattern 210. In order to keep the length of a slot mode maximal, an antenna pattern portion, which is not a slot region of the first conductive pattern 210 adjacent to the second conductive pattern 220 equipped with the touch sensor, may be formed to have the same shape as antenna pattern portions in FIGS. 9A and 11.

An end of one side of the PCB 150 may be formed adjacent to the end of the ground pattern 212 of the first conductive pattern 210. The FPCB 160 may be configured to connect the PCB 150 and the first conductive pattern 210 to each other. The second FPCB 162 may be arranged on the metal frame 165, which forms an inner lateral surface region shaped to conform to a curved surface of the main body portion. The FPCB 160 may be formed to surround the metal frame 165, which forms the inner lateral surface region shaped to conform to the curved surface of the main body portion. The second FPCB 162 may also be formed to surround the metal frame 165, which forms the inner lateral surface region shaped to conform to the curved surface of the main body portion.

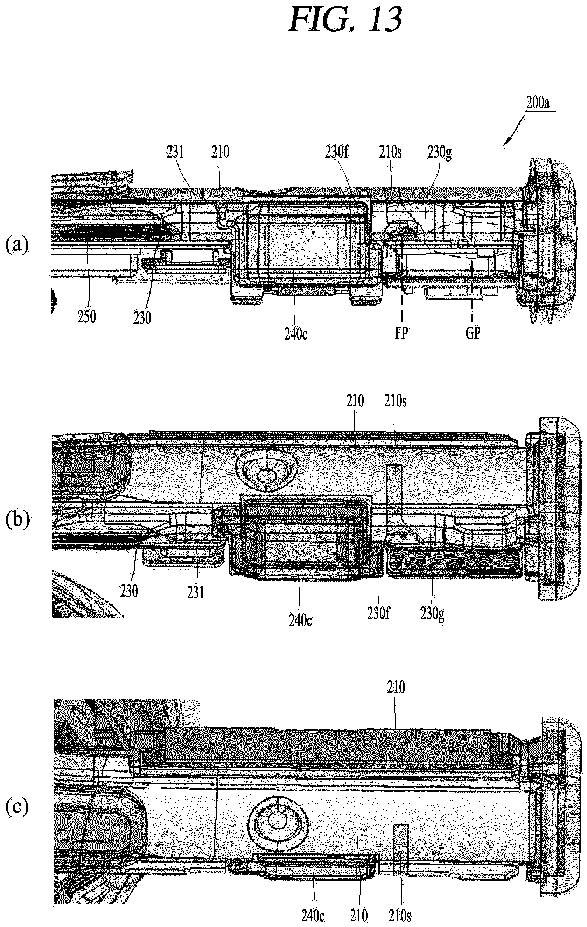

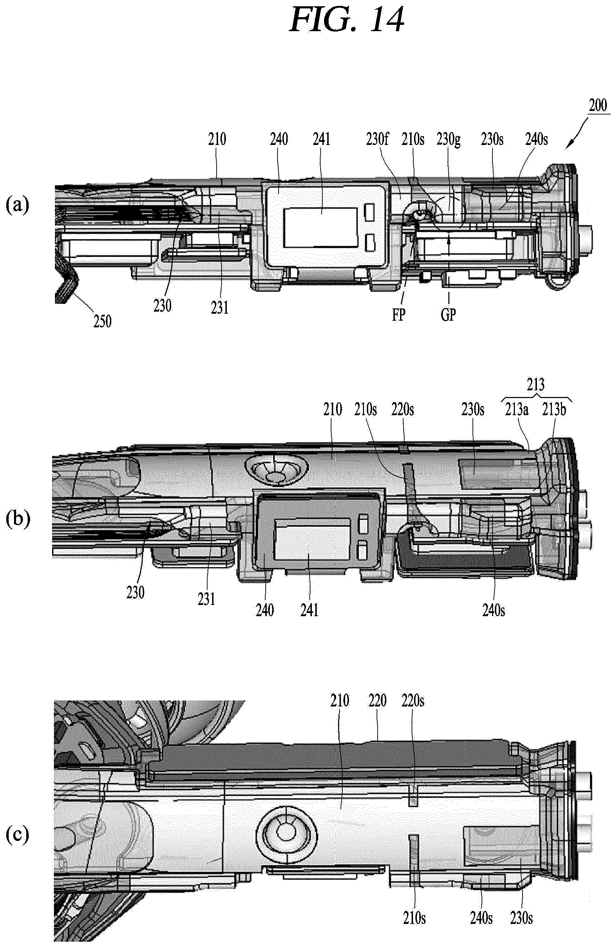

The radiator structure of the earbud according to the present disclosure may be formed as a single-slot structure or a multi-slot structure. In this regard, FIG. 13 is a combination of side, perspective, and front views illustrating the earbud in which the conductive pattern formed to have the single slot structure is arranged. FIG. 14 is a combination of side, perspective, and front views illustrating the earbud in which the conductive pattern formed to have the multi-slot structure is arranged.

With reference to FIGS. 9A and 9B, (a) of FIG. 13, and (a) of FIG. 14, the first conductive pattern 210 may be configured to radiate a signal in the Bluetooth frequency band. The first conductive pattern 210 may be formed to be connected to the third conductive pattern 230. The feeding connection pattern 230f of the third conductive pattern 230 forming the slot region 210s may be connected to the feeding connection portion FP, which is one end portion of the coaxial cable 250. The ground connection pattern 230g of the third conductive pattern 230 may be connected to the ground connection portion GP, the slot region 210s being formed between the feeding connection pattern 230f and the ground connection pattern 230g. The fourth conductive pattern 240 may be arranged inside the dielectric cover 240c in FIG. 13 and may be configured to radiate a signal in the UWB frequency band. The force sensor 241 or the pressure sensor may be arranged in the fourth conductive pattern 240.

With reference to FIG. 9A and (b) of FIG. 13, the first slot region 210s may be formed in the first and third conductive patterns 210 and 230, and the radiator 200a may be configured to have the single-slot structure. With reference to FIG. 9B and (b) of FIG. 14, the radiator 200 may be configured to have the multi-slot structure. The first slot region 210s may be formed in the first and third conductive patterns 210 and 230. The second slot region 220s may be formed on the first conductive pattern 210s such that the second slot region 220s is spaced apart from the first slot region 210s in the direction of one axis. The third slot region 230s may be formed on the first conductive pattern 210s such that the third slot region 230s is spaced apart from the first slot region 210s in the direction of the other axis. The fourth slot region 240s may be formed on the first and third conductive patterns 210 and 230 such that the fourth slot region 240s is spaced apart from the first slot region 210s. The end portion of the first conductive pattern 210, on which the third slot region 230s is formed, may form the sub-pattern 213a or 213 that operates as a radiator in the UWB frequency band. Accordingly, the radiator 200 may be configured to exhibit multi-resonance in the UWB frequency band.

With reference to FIG. 9A and (c) of FIG. 13, with the first and second conductive patterns 210 and 220, it is possible to expand the operational frequency band up to the second frequency band, which is the Bluetooth frequency band. With reference to FIG. 9B and (c) of FIG. 14, with the first and second conductive patterns 210 and 220, it is possible to expand the operational frequency band up to the second frequency band, which is the Bluetooth frequency band. In this regard, as the second to fourth slot regions 220s to 240s are added to the first and third conductive patterns 210 and 230, the operational frequency band, which is the second frequency band, may also be further expanded.

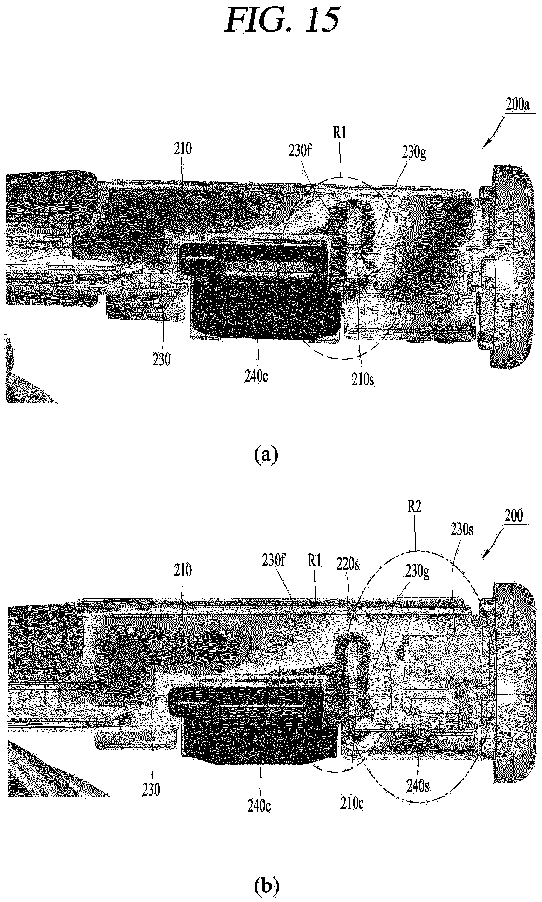

The operating principle in the UWB frequency band is described by comparing current distributions in the radiator structures configured as the single-slot structure and the multi-slot structure according to the present disclosure. FIG. 15 is a set of views illustrating a comparison between the current distributions in the radiator structures configured as the single-slot structure and the multi-slot structure. FIG. 9A and (a) of FIG. 15 illustrate the radiator 200a in which the slot region 210s is formed on the first and third conductive patterns 210 and 230. FIG. 9B and (b) of FIG. 15 illustrate the radiator 200 in which the first to fourth slot regions 210s to 240s are formed on the first and third conductive patterns 210 and 230.

In both the structures of the radiators 200a and 200 in (a) of FIG. 15 and (b) of FIG. 15, the current distributions in the feeding connection pattern 230f and the ground connection pattern 230g, which are adjacent to the slot regions 210s, are higher than in other portions. Therefore, the feeding connection pattern 230f and the ground connection pattern 230g, which are adjacent to the slot region 210s, may operate such that the force sensor inside the dielectric casing 240c is configured to excite the radiator operating in the UWB frequency band. Accordingly, the slot region 210s on the first and third conductive patterns 210 and 230 and a first region R1 where the force sensor is arranged may operate as the UWB radiator having a first structure.

The radiator 200 having the multi-slot structure in (b) of FIG. 15 includes the conductive patterns that are formed to have a plurality of structures and are capable of generating UWB resonance, in contrast to the radiator 200a having the single-slot structure (a) of FIG. 15. As a result, the radiator 200 may expand the UWB operational frequency band. In this regard, the slot region 210s on the first and third conductive patterns 210 and 230, the first region R1 where the force sensor is arranged, and a second region R2 adjacent to the first region R1 may all operate as the UWB radiator having a second structure. The second region R2 of the UWB radiator having the second structure may include the second to fourth slot regions 220s to 240s. The UWB radiator having the second structure may perform broader band operation due to the second region R2, which forms sub-patterns of the first and third conductive patterns 210 and 230 adjacent to the second to fourth slot regions 220s to 240s.

The broadband antenna structure arranged inside the earbud according to the present disclosure uses the conductive pattern in the sensor and the mechanical structure, such as the metal frame, as one portion of the radiator, in addition to the conductive pattern that operates as the radiator. Therefore, the broadband antenna structure arranged inside the earbuds corresponds to a broadband sensor-fusion-type zero-volume antenna, which ensures antenna performance not only in the Bluetooth band but also in both frequency bands that are narrower and broader than the Bluetooth band.

This multi-mode antenna structure arranged inside the earbud may ensure broadband antenna performance, for example, an antenna bandwidth five times broader than the Bluetooth bandwidth, thereby maintaining stable antenna performance under various user scenarios. In this regard, the structural radiation performance, which depends on the mechanism and the PCB structure, may achieve a high radiation efficiency of -6 dB or better, with an average of -5 dB or better across the entire band.

The earbud equipped with the broadband antenna structure according to the present disclosure is described above. An electronic device equipped with an antenna provided inside a dielectric housing, according to the present disclosure, is described below. In this regard, with reference to FIGS. 1 to 15, the electronic device equipped with an antenna provided inside a dielectric housing, according to the present specification, will be described.

An electronic device 100 may include a dielectric housing 120 having a main body portion 120b with a port 120a and a protruding portion extending from the main body portion 120b. The electronic device 100 may include the antenna 200 that is arranged inside the protruding portion and radiates a wireless signal toward the exterior of the electronic device. The antenna 200 may include the first conductive pattern 210 and the second conductive pattern 220 inside the protruding portion. The first conductive pattern 210 is formed on the first surface S1, and the second conductive pattern 220 is formed on the second surface S2 perpendicular to the first surface S1. The antenna 200 may include the first conductive pattern 210 and the connection portion 250 configured to electrically connect the first conductive pattern 210 and the printed circuit board (PCB) 150 to each other. The connection portion 250 may be implemented as a coaxial cable, which is an RF cable, but is not limited thereto.

The antenna 200 may include the third conductive pattern 230 formed on the third surface S3, which is perpendicular to the first surface S1 and faces the second surface S2. The third conductive pattern 230 includes the feeding connection pattern 230f and the ground connection pattern 230g. The antenna 200 may include the slot region 210s formed by removing at least one region of the first conductive pattern 210 on the first surface S1 and the third conductive pattern 230 on the third surface S3. The antenna 200 may include the fourth conductive pattern 240 that is arranged on the third surface S3 such that the fourth conductive pattern 240 is adjacent to the feeding connection pattern 230f of the third conductive pattern 230.

The first conductive pattern 210 and the connection portion 250 may be configured to radiate a signal in the first frequency band. The first conductive pattern 210 and the second conductive pattern 220 may be configured to radiate a signal in the second frequency band different from the first frequency band. The fourth conductive pattern 240 and the slot region 210a may be configured to radiate a signal in the third frequency band that is broader than the first and second frequency bands.

The slot region 210s may be formed between the feeding connection pattern 230f and the ground connection pattern 230g. The slot region 210s may be formed to have the first length L1 on one axis on the first surface S1 and the first width W1 on the other axis. The feeding connection pattern 230f of the third conductive pattern 230 may be connected to the signal line 251 of the coaxial cable 250 arranged under the dielectric structure 201 on which the first conductive pattern 210 is arranged. The ground connection pattern 230g of the third conductive pattern 230 may be connected to the ground structure 150g of the second PCB 150b arranged under the dielectric structure 201.

The antenna 200 may be configured to include a plurality of slot regions. The antenna 200 may include the second slot region 220s that is formed on the first surface S1 such that the second slot region 220s is positioned at the same point on one axis as the slot region 210s and is spaced apart from the slot region 210s on the other axis . The antenna 200 may include the third slot region 230 that is formed on the first surface S1 such that the third slot region 230 is spaced apart from the slot region 210s on the other axis. The antenna 200 may include the fourth slot region 240s that is formed on the first surface S1 and the third surface S3 such that the fourth slot region 240s is spaced apart from the slot region 210s on the other axis.

The slot region 210s and the second slot region 220s may be formed such that the slot region 210s and the second slot region 220s are spaced apart, by the second length L2 in the direction of the other axis, from the end of the first conductive pattern 210 adjacent to the stalk 122. The length of the third slot region 230s may be defined as the third length L3, which is shorter than the second length L2, in the direction of the other axis. The length from one end of the fourth slot region 240s to the end of the first conductive pattern 210s may be defined as the fourth length L4, which is shorter than the second length L2, in the direction of the other axis.

The second conductive pattern 220 may include the touch sensor. The first conductive pattern 210 may be formed to have the first pattern length Lp1 along the first axial direction of the stalk 122. The second conductive pattern 220 may be formed to have the second pattern length Lp2, which is shorter than the first pattern length Lp1, along the first axial direction of the stalk 122. The signal line 251 of the coaxial cable 250 may be connected to the first conductive pattern 210. The fourth conductive pattern 240 formed on the third surface S3 facing the second conductive pattern 220 may include the force sensor 241 or the pressure sensor. The fourth conductive pattern 240 may be arranged between an end of the other side of the sub-pattern of the third conductive pattern 230 formed on the third surface S3 and an end of one side of the feeding connection pattern 230f formed on the third surface S3.

The wireless earbud equipped with the broadband antenna is described above. The technical effects of the wireless earbud equipped with this broadband antenna may be described in a summarized manner as follows, but are not limited thereto.

According to the present disclosure, the broadband antenna can be configured to perform broadband operation in the electronic device, such as the wireless earbud.

According to the present disclosure, the current formed in the conductive pattern in the antenna, which is included in the wireless earbud, can be transferred to the touch sensor through coupling, thereby increasing the operational bandwidth of the antenna.

While the wireless earbud is worn on a user's ear, the resonance frequency of the antenna may change due to the user's movement and the movement of the wireless earbud within the cavity of the user's ear. According to the present disclosure, the wireless signal can be reliably received even under such conditions.

According to the present disclosure, a change in antenna performance, which is caused by the limited space available for arranging the antenna inside the mechanism of the wireless earbud, can be minimized. Consequently, wireless communication performance can be reliably maintained.

According to the present disclosure, an antenna structure can be implemented that is capable of operating in the Bluetooth frequency band and the UWB band. This operation is enabled through the conductive pattern arranged on the front surface of the dielectric structure inside the wireless earbud, and on the conductive pattern having the force sensor arranged on the lateral surface of the dielectric structure.

According to the present disclosure, an antenna structure can be implemented that is capable of operating in the Bluetooth frequency band and the UWB band through one or more slot regions. These slot regions are formed on the conductive pattern having the force sensor arranged on the lateral surface of the dielectric structure, and on the conductive pattern arranged on the front surface of the dielectric structure.

Further scope of applicability of the present disclosure will become apparent from the following detailed description. However, various alterations and modifications to the present disclosure would be readily understood by a person of ordinary skill in the art without departing the scope of the appended claims. The detailed description and specific embodiments, such as preferred embodiments of the disclosure, should be understood as illustrative examples only.

The antenna structure arranged in the wireless earbud according to the present disclosure and the operation of controlling the antenna structure can be implemented in software, firmware, or a combination of both. The antenna structure arranged in the wireless earbud and the configuration for performing the operation of controlling the antenna structure can be implemented as computer-readable codes stored on a program-recorded medium. Computer-readable media include all types of recording devices on which data readable by a computer system may be stored. Furthermore, examples of the computer-readable medium include a hard disk drive (HDD), a solid-state disk (SSD), a silicon disk drive (SDD), a ROM, a RAM, a CD-ROM, a magnetic tape, a floppy disk, an optical data storage device, and similar storage devices. The computer-readable medium may also be realized in the form of a carrier wave (such as for transmission over the Internet). In addition, the computer may also include a control unit, that is, a processor, for a terminal or a wireless earbud. Therefore, the description detailed above should be regarded as exemplary, without being interpreted in a limited manner in all aspects. The scope of the present disclosure should be determined by the proper construction of the following claims.

## Claims

1. An earbud (100) comprising:
a housing (120) that includes a main body portion (120b) with a speaker port (120a) and a stalk (122) extending from the main body portion (120b);
a dielectric structure (201) arranged inside the stalk (122) and formed to have a front surface, a rear surface, and lateral surfaces;
a radiator (200) formed on the dielectric structure (201) and radiating a wireless signal toward the exterior of the earbud (100); and
a printed circuit board, PCB (150) electrically connected to the radiator (200),
wherein the radiator (200) comprises:
a first conductive pattern (210) formed on a first surface (S1) of the dielectric structure (201);
a second conductive pattern (220) formed on a second surface (S2) perpendicular to the first surface (S1);
a coaxial cable (250), the coaxial cable electrically connects the first conductive pattern (210) and the PCB (150) to each other;
a third conductive pattern (230), formed on a third surface (S3) perpendicular to the first surface (S1) and facing the second surface (S2), and including a feeding connection pattern (230f) and a ground connection pattern (230g);
a slot region (210s) formed by removing at least one region of the first conductive pattern (210) on the first surface (S1) and the third conductive pattern (230) on the third surface (S3); and
a fourth conductive pattern (240) arranged on the third surface (S3) such that the fourth conductive pattern (240) is adjacent to the feeding connection pattern (230f) of the third conductive pattern (230),
wherein the first conductive pattern (210) and the coaxial cable (250) are configured to radiate a signal in a first frequency band,
wherein the first conductive pattern (210) and the second conductive pattern (220) are configured to radiate a signal in a second frequency band different from the first frequency band, and
wherein the fourth conductive pattern (240) and the slot region (210s) are configured to radiate a signal in a third frequency band that is broader than the first frequency band and second frequency band.

2. The earbud (100) of claim 1, wherein the slot region (210s) is formed between the feeding connection pattern (230f) and the ground connection pattern (230g),
wherein the slot region (210s) is formed to have a first length on one axis on the first surface (S1) and a first width on the other axis, and
wherein the feeding connection pattern (230f) is connected to a signal line of the coaxial cable (250) arranged under the dielectric structure (201), and the ground connection pattern (230g) is connected to a ground structure (150g) connected to a second PCB (150b) arranged under the dielectric structure (201).

3. The earbud (100) of claim 2, wherein the radiator (200) further comprises:
a second slot region (220s) formed on the first surface (S1) such that the second slot region (220s) is positioned at the same point on the one axis as the slot region (210s) and is spaced apart from the slot region (210s) on the other axis;
a third slot region (230s) formed on the first surface (S1) such that the third slot region (230s) is spaced apart from the slot region (210s) on the other axis; and
a fourth slot region (240s) formed on the first surface (S1) and the third surface (S3) such that the fourth slot region (240s) is spaced apart from the slot region (210s) on the other axis.

4. The earbud (100) of claim 3, wherein the slot region (210s) and the second slot region (220s) are formed such that the slot region (210s) and the second slot region (220s) are spaced apart, by a second length (L2) in the direction of the other axis, from an end of the first conductive pattern (210) adjacent to the stalk (122),
wherein the length of the third slot region (230s) is defined as a third length (L3), which is shorter than the second length (L2), in the direction of the other axis, and
wherein the length from one end of the fourth slot region (240s) to the end of the first conductive pattern (210) is defined as a fourth length (L4), which is shorter than the second length (L2), in the direction of the other axis.

5. The earbud (100) of claim 4, wherein the second length (L2) from the end of the first conductive pattern (210) to an end of one side of the slot region (210s) and an end of one side of the second slot region (220s) is defined to fall within a predetermined range of lengths, with 4.4 mm serving as a reference value,
wherein the third length (L3) to an end of one side of the third slot region (230s) is defined to fall within a range of 2.4 to 2.75 mm, and
wherein the fourth length (L4) to an end of one side of the fourth slot region (240s) is defined to fall within a predetermined range of lengths, with 2.8 mm serving as a reference value.

6. The earbud (100) of any one of claims 2 to 5, wherein the second conductive pattern (220) includes a touch sensor, and
wherein the first conductive pattern (210) is formed to have a first pattern length (Lp1) in the direction of the one axis of the stalk (122), and the second conductive pattern (220) is formed to have a second pattern length (Lp2) shorter than the first pattern length (Lp1) in the direction of the one axis.

7. The earbud (100) of any one of claims 3 to 6, wherein the fourth conductive pattern (240) formed on the third surface (S3) facing the second conductive pattern (240) includes a force sensor or a pressure sensor (241), and
wherein the fourth conductive pattern (240) is arranged between an end of the other side of a sub-pattern (231) of the third conductive pattern (230) formed on the third surface (S3) and an end of one side of the feeding connection pattern (230f) formed on the third surface (S3).

8. The earbud (100) of claim 7, wherein the third conductive pattern (230) comprises:
the sub-pattern (231) arranged to be spaced apart from an end of one side of the fourth conductive pattern (240);
the feeding connection pattern (230f) arranged to be spaced apart from an end of the other side of the fourth conductive pattern (240), and connected to a feeding terminal of the PCB (150); and
the ground connection pattern (230g) arranged to be spaced apart from the feeding connection pattern (230f) by the slot region (210s), and connected to a ground of the PCB (150).

9. The earbud (100) of claim 7 or 8, wherein the third conductive pattern (230) further comprises:
a second sub-pattern (232) arranged to be spaced apart from the ground connection pattern (230g) by the fourth slot region (240s), and connected to the first conductive pattern (210) between the slot region (210s) and the third slot region (230s).

10. The earbud (100) of any one of claims 7 to 9, wherein the third conductive pattern (230) and the slot region (210s), which are formed on the third surface (S3), are configured to radiate a signal in a third frequency band broader than the second frequency band, and
wherein the third conductive pattern (230) and the slot region (210s) exhibit dual resonance in 7 GHz and 10 GHz bands for UWB communication.

11. The earbud (100) of any one of claims 7 to 10, wherein the third conductive pattern (230) and the slot region (210s), which are formed on the third surface (S3), the second slot region (220s), the third slot region (230s), and the fourth slot region (240s) are configured to radiate a signal in a third frequency band broader than the second frequency band, and
wherein the third conductive pattern (230) and the slot region (210s), the second slot region (220s), the third slot region (230s), and the fourth slot region (240s) exhibit multi-resonance in a frequency band from 6 GHz to 10 GHz for UWB communication.

12. The earbud (100) of any one of claims 6 to 11, wherein a signal line (251) of the coaxial cable (250) is connected to the first conductive pattern (210),
wherein a ground (253) of the coaxial cable (250) is connected to a ground of the PCB (150),
wherein the first pattern length (Lp1) of the first conductive pattern (210) is defined to fall within a predetermined range of lengths, with 14.6 mm serving as a reference value, and the second pattern length (Lp2) of the second conductive pattern (220) is defined to fall within a predetermined range of lengths, with 13.6 mm serving as a reference value, and
wherein the first frequency band is a frequency band having a center frequency of 2.3 GHz to perform Bluetooth communication with an electronic device, and the second frequency band is a frequency band having a center frequency of 2.6 GHz to perform the Bluetooth communication.

13. The earbud (100) of any one of claims 2 to 12, wherein the first conductive pattern (210) formed on the first surface (S1) and the coaxial cable (250) formed on the first surface (S1) radiate a first signal in the first frequency band,
wherein the first conductive pattern (210) and the second conductive pattern (220) formed on the second surface (S2) perpendicular to the first surface (S1) are configured to radiate a second signal in the second frequency band,
wherein the first conductive pattern (210) and the second conductive pattern (220) are formed such that an end of one side of the first conductive pattern (210) and an end of one side of the second conductive pattern (220) are spaced apart from each other, and a current formed in the first conductive pattern (210) is transferred to the second conductive pattern (220) through coupling in the second frequency band, and
wherein a first direction of a first current formed in the first conductive pattern (210) and the coaxial cable (250) on the first surface (S1) is set to be orthogonal to a second direction of a second current formed in the second conductive pattern (220) on the second surface (S2) perpendicular to the first surface (S1), thereby enabling the radiator (200) to perform broadband operation in the first frequency and the second frequency band.

14. The earbud (100) of any one of claims 2 to 13, wherein a signal pattern (211) of the first conductive pattern (210) is formed as a conductive pattern in a predetermined shape to radiate a signal in the first frequency band and the second frequency band,
wherein a ground pattern (212) of the first conductive pattern (210) is electrically connected to a ground (253) of the coaxial cable (250),
wherein a signal pattern of the second conductive pattern (220) is formed as a conductive pattern in a predetermined shape to radiate a signal in the second frequency band and to operate as a touch sensor, and
wherein a ground pattern of the second conductive pattern (220) is electrically connected to the ground (253) of the coaxial cable (250).

15. The earbud (100) of any one of claims 2 to 14, wherein a signal pattern of the fourth conductive pattern (240) is formed as a conductive pattern in a predetermined shape to operate as a force sensor (241), and
wherein a ground pattern of the fourth conductive pattern (240) is electrically connected to a ground (253) of the coaxial cable (250).

## Patentansprüche

1. Ohrhörer (100), umfassend:
ein Gehäuse (120), das einen Hauptkörperabschnitt (120b) mit einer Lautsprecheröffnung (120a) und einen sich von dem Hauptkörperabschnitt (120b) erstreckenden Stiel (122) umfasst;
eine dielektrische Struktur (201), die im Inneren des Stiels (122) angeordnet und so ausgebildet ist, dass sie eine Vorderfläche, eine Rückfläche und Seitenflächen aufweist;
einen Strahler (200), der auf der dielektrischen Struktur (201) gebildet ist und ein Drahtlos-Signal nach außerhalb des Ohrhörers (100) hin abstrahlt; und
eine gedruckte Leiterplatte, PCB (150), die elektrisch mit dem Strahler (200) verbunden ist,
wobei der Strahler (200) umfasst:
ein erstes leitfähiges Muster (210), das auf einer ersten Fläche (S1) der dielektrischen Struktur (201) gebildet ist;
ein zweites leitfähiges Muster (220), das auf einer zweiten Fläche (S2) gebildet ist, die senkrecht zu der ersten Fläche (S1) verläuft;
ein Koaxialkabel (250), wobei das Koaxialkabel das erste leitfähige Muster (210) und die Leiterplatte (150) elektrisch miteinander verbindet;
ein drittes leitfähiges Muster (230), das auf einer dritten Fläche (S3) gebildet ist, die senkrecht zu der ersten Fläche (S1) verläuft und der zweiten Fläche (S2) zugewandt ist, und das ein Speiseverbindungsmuster (230f) und ein Masseverbindungsmuster (230g) umfasst;
einen Schlitzbereich (210s), der durch Entfernen mindestens eines Bereichs des ersten leitfähigen Musters (210) auf der ersten Fläche (S1) und des dritten leitfähigen Musters (230) auf der dritten Fläche (S3) gebildet ist; und
ein viertes leitfähiges Muster (240), das auf der dritten Fläche (S3) so angeordnet ist, dass das vierte leitfähige Muster (240) dem Speiseverbindungsmuster (230f) des dritten leitfähigen Musters (230) benachbart ist,
wobei das erste leitfähige Muster (210) und das Koaxialkabel (250) dazu eingerichtet sind, ein Signal in einem ersten Frequenzband abzustrahlen,
wobei das erste leitfähige Muster (210) und das zweite leitfähige Muster (220) dazu eingerichtet sind, ein Signal in einem zweiten Frequenzband, das sich von dem ersten Frequenzband unterscheidet, abzustrahlen, und
wobei das vierte leitfähige Muster (240) und der Schlitzbereich (210s) dazu eingerichtet sind, ein Signal in einem dritten Frequenzband abzustrahlen, das breiter als das erste Frequenzband und das zweite Frequenzband ist.

2. Ohrhörer (100) nach Anspruch 1, wobei der Schlitzbereich (210s) zwischen dem Speiseverbindungsmuster (230f) und dem Masseverbindungsmuster (230g) gebildet ist,
wobei der Schlitzbereich (210s) so ausgebildet ist, dass er auf der ersten Fläche (S1) entlang der einen Achse eine erste Länge und entlang der anderen Achse eine erste Breite aufweist, und
wobei das Speiseverbindungsmuster (230f) mit einer Signalleitung des unter der dielektrischen Struktur (201) angeordneten Koaxialkabels (250) verbunden ist und das Masseverbindungsmuster (230g) mit einer Massestruktur (150g) verbunden ist, die mit einer unter der dielektrischen Struktur (201) angeordneten zweiten Leiterplatte (150b) verbunden ist.

3. Ohrhörer (100) nach Anspruch 2, wobei der Strahler (200) ferner umfasst:
einen zweiten Schlitzbereich (220s), der auf der ersten Fläche (S1) so gebildet ist, dass der zweite Schlitzbereich (220s) auf der einen Achse an demselben Punkt wie der Schlitzbereich (210s) positioniert und entlang der anderen Achse von dem Schlitzbereich (210s) beabstandet ist;
einen dritten Schlitzbereich (230s), der auf der ersten Fläche (S1) so gebildet ist, dass der dritte Schlitzbereich (230s) entlang der anderen Achse von dem Schlitzbereich (210s) beabstandet ist; und
einen vierten Schlitzbereich (240s), der auf der ersten Fläche (S1) und der dritten Fläche (S3) so gebildet ist, dass der vierte Schlitzbereich (240s) entlang der anderen Achse von dem Schlitzbereich (210s) beabstandet ist.

4. Ohrhörer (100) nach Anspruch 3, wobei der Schlitzbereich (210s) und der zweite Schlitzbereich (220s) so gebildet sind, dass der Schlitzbereich (210s) und der zweite Schlitzbereich (220s) in Richtung der anderen Achse um eine zweite Länge (L2) von einem dem Stiel (122) benachbarten Ende des ersten leitfähigen Musters (210) beabstandet sind,
wobei die Länge des dritten Schlitzbereichs (230s) in Richtung der anderen Achse als eine dritte Länge (L3) definiert ist, die kürzer als die zweite Länge (L2) ist, und
wobei die Länge von einem Ende des vierten Schlitzbereichs (240s) bis zu dem Ende des ersten leitfähigen Musters (210) in Richtung der anderen Achse als eine vierte Länge (L4) definiert ist, die kürzer als die zweite Länge (L2) ist.

5. Ohrhörer (100) nach Anspruch 4, wobei die zweite Länge (L2) von dem Ende des ersten leitfähigen Musters (210) bis zu einem Ende einer Seite des Schlitzbereichs (210s) und einem Ende einer Seite des zweiten Schlitzbereichs (220s) so definiert ist, dass sie innerhalb eines vorbestimmten Längenbereichs liegt, wobei 4,4 mm als Referenzwert dient,
wobei die dritte Länge (L3) bis zu einem Ende einer Seite des dritten Schlitzbereichs (230s) so definiert ist, dass sie in einem Bereich von 2,4 bis 2,75 mm liegt, und
wobei die vierte Länge (L4) bis zu einem Ende einer Seite des vierten Schlitzbereichs (240s) so definiert ist, dass sie innerhalb eines vorbestimmten Längenbereichs liegt, wobei 2,8 mm als Referenzwert dient.

6. Ohrhörer (100) nach einem der Ansprüche 2 bis 5, wobei das zweite leitfähige Muster (220) einen Berührungssensor umfasst, und
wobei das erste leitfähige Muster (210) so gebildet ist, dass es in Richtung der einen Achse des Stiels (122) eine erste Musterlänge (Lp1) aufweist, und das zweite leitfähige Muster (220) so gebildet ist, dass es in Richtung der einen Achse eine zweite Musterlänge (Lp2) aufweist, die kürzer als die erste Musterlänge (Lp1) ist.

7. Ohrhörer (100) nach einem der Ansprüche 3 bis 6, wobei das vierte leitfähige Muster (240), das auf der dritten Fläche (S3) gebildet ist und dem zweiten leitfähigen Muster (240) zugewandt ist, einen Kraftsensor oder einen Drucksensor (241) umfasst, und
wobei das vierte leitfähige Muster (240) zwischen einem Ende der anderen Seite eines Teilmusters (231) des auf der dritten Fläche (S3) gebildeten dritten leitfähigen Musters (230) und einem Ende einer Seite des auf der dritten Fläche (S3) gebildeten Speiseverbindungsmusters (230f) angeordnet ist.

8. Ohrhörer (100) nach Anspruch 7, wobei das dritte leitfähige Muster (230) umfasst:
das Teilmuster (231), das von einem Ende einer Seite des vierten leitfähigen Musters (240) beabstandet angeordnet ist;
das Speiseverbindungsmuster (230f), das von einem Ende der anderen Seite des vierten leitfähigen Musters (240) beabstandet angeordnet und mit einem Speiseanschluss der Leiterplatte (150) verbunden ist; und
das Masseverbindungsmuster (230g), das durch den Schlitzbereich (210s) von dem Speiseverbindungsmuster (230f) beabstandet angeordnet und mit einer Masse der Leiterplatte (150) verbunden ist.

9. Ohrhörer (100) nach Anspruch 7 oder 8, wobei das dritte leitfähige Muster (230) ferner umfasst:
ein zweites Teilmuster (232), das durch den vierten Schlitzbereich (240s) von dem Masseverbindungsmuster (230g) beabstandet angeordnet und zwischen dem Schlitzbereich (210s) und dem dritten Schlitzbereich (230s) mit dem ersten leitfähigen Muster (210) verbunden ist.

10. Ohrhörer (100) nach einem der Ansprüche 7 bis 9, wobei das dritte leitfähige Muster (230) und der Schlitzbereich (210s), die auf der dritten Fläche (S3) gebildet sind, dazu eingerichtet sind, ein Signal in einem dritten Frequenzband abzustrahlen, das breiter als das zweite Frequenzband ist, und
wobei das dritte leitfähige Muster (230) und der Schlitzbereich (210s) eine Doppelresonanz in einem 7-GHz-Band und einem 10-GHz-Band für die UWB-Kommunikation aufweisen.

11. Ohrhörer (100) nach einem der Ansprüche 7 bis 10, wobei das dritte leitfähige Muster (230) und der Schlitzbereich (210s), die auf der dritten Fläche (S3) gebildet sind, sowie der zweite Schlitzbereich (220s), der dritte Schlitzbereich (230s) und der vierte Schlitzbereich (240s) dazu eingerichtet sind, ein Signal in einem dritten Frequenzband abzustrahlen, das breiter als das zweite Frequenzband ist, und
wobei das dritte leitfähige Muster (230) und der Schlitzbereich (210s) sowie der zweite Schlitzbereich (220s), der dritte Schlitzbereich (230s) und der vierte Schlitzbereich (240s) eine Mehrfachresonanz in einem Frequenzband von 6 GHz bis 10 GHz für die UWB-Kommunikation aufweisen.

12. Ohrhörer (100) nach einem der Ansprüche 6 bis 11, wobei eine Signalleitung (251) des Koaxialkabels (250) mit dem ersten leitfähigen Muster (210) verbunden ist,
wobei eine Masse (253) des Koaxialkabels (250) mit einer Masse der Leiterplatte (150) verbunden ist,
wobei die erste Musterlänge (Lp1) des ersten leitfähigen Musters (210) so definiert ist, dass sie innerhalb eines vorbestimmten Längenbereichs liegt, wobei 14,6 mm als Referenzwert dient, und die zweite Musterlänge (Lp2) des zweiten leitfähigen Musters (220) so definiert ist, dass sie innerhalb eines vorbestimmten Längenbereichs liegt, wobei 13,6 mm als Referenzwert dient, und
wobei das erste Frequenzband ein Frequenzband mit einer Mittenfrequenz von 2,3 GHz zur Durchführung einer Bluetooth-Kommunikation mit einem elektronischen Gerät ist und das zweite Frequenzband ein Frequenzband mit einer Mittenfrequenz von 2,6 GHz zur Durchführung der Bluetooth-Kommunikation ist.

13. Ohrhörer (100) nach einem der Ansprüche 2 bis 12, wobei das auf der ersten Fläche (S1) gebildete erste leitfähige Muster (210) und das auf der ersten Fläche (S1) gebildete Koaxialkabel (250) ein erstes Signal in dem ersten Frequenzband abstrahlen,
wobei das erste leitfähige Muster (210) und das auf der zweiten Fläche (S2), die senkrecht zu der ersten Fläche (S1) verläuft, gebildete zweite leitfähige Muster (220) dazu eingerichtet sind, ein zweites Signal in dem zweiten Frequenzband abzustrahlen,
wobei das erste leitfähige Muster (210) und das zweite leitfähige Muster (220) so gebildet sind, dass ein Ende einer Seite des ersten leitfähigen Musters (210) und ein Ende einer Seite des zweiten leitfähigen Musters (220) voneinander beabstandet sind und ein in dem ersten leitfähigen Muster (210) gebildeter Strom durch Kopplung in dem zweiten Frequenzband auf das zweite leitfähige Muster (220) übertragen wird, und
wobei eine erste Richtung eines ersten Stroms, der in dem ersten leitfähigen Muster (210) und dem Koaxialkabel (250) auf der ersten Fläche (S1) gebildet wird, so festgelegt ist, dass sie orthogonal zu einer zweiten Richtung eines zweiten Stroms ist, der in dem zweiten leitfähigen Muster (220) auf der zweiten Fläche (S2), die senkrecht zu der ersten Fläche (S1) verläuft, gebildet wird, wodurch der Strahler (200) in die Lage versetzt wird, einen Breitbandbetrieb in der ersten Frequenz und in dem zweiten Frequenzband durchzuführen.

14. Ohrhörer (100) nach einem der Ansprüche 2 bis 13, wobei ein Signalmuster (211) des ersten leitfähigen Musters (210) als ein leitfähiges Muster mit einer vorbestimmten Form ausgebildet ist, um ein Signal in dem ersten Frequenzband und dem zweiten Frequenzband abzustrahlen,
wobei ein Massemuster (212) des ersten leitfähigen Musters (210) elektrisch mit einer Masse (253) des Koaxialkabels (250) verbunden ist,
wobei ein Signalmuster des zweiten leitfähigen Musters (220) als ein leitfähiges Muster mit einer vorbestimmten Form ausgebildet ist, um ein Signal in dem zweiten Frequenzband abzustrahlen und als Berührungssensor zu arbeiten, und
wobei ein Massemuster des zweiten leitfähigen Musters (220) elektrisch mit der Masse (253) des Koaxialkabels (250) verbunden ist.

15. Ohrhörer (100) nach einem der Ansprüche 2 bis 14, wobei ein Signalmuster des vierten leitfähigen Musters (240) als ein leitfähiges Muster mit einer vorbestimmten Form ausgebildet ist, um als Kraftsensor (241) zu arbeiten, und
wobei ein Massemuster des vierten leitfähigen Musters (240) elektrisch mit einer Masse (253) des Koaxialkabels (250) verbunden ist.

## Revendications

1. Écouteur (100), comprenant :
un boîtier (120) qui comprend une partie de corps principale (120b) pourvue d'un orifice de haut-parleur (120a) et une tige (122) s'étendant depuis la partie de corps principale (120b) ;
une structure diélectrique (201) disposée à l'intérieur de la tige (122) et formée de manière à présenter une surface avant, une surface arrière et des surfaces latérales ;
un élément rayonnant (200) formé sur la structure diélectrique (201) et rayonnant un signal sans fil vers l'extérieur de l'écouteur (100) ; et
une carte de circuit imprimé, PCB (150), reliée électriquement à l'élément rayonnant (200),
dans lequel l'élément rayonnant (200) comprend :
un premier motif conducteur (210) formé sur une première surface (S1) de la structure diélectrique (201) ;
un deuxième motif conducteur (220) formé sur une deuxième surface (S2) perpendiculaire à la première surface (S1) ;
un câble coaxial (250), le câble coaxial reliant électriquement entre eux le premier motif conducteur (210) et le PCB (150) ;
un troisième motif conducteur (230), formé sur une troisième surface (S3) perpendiculaire à la première surface (S1) et faisant face à la deuxième surface (S2), et comprenant un motif de connexion d'alimentation (230f) et un motif de connexion à la masse (230g) ;
une région de fente (210s) formée par élimination d'au moins une région du premier motif conducteur (210) sur la première surface (S1) et du troisième motif conducteur (230) sur la troisième surface (S3) ; et
un quatrième motif conducteur (240) disposé sur la troisième surface (S3) de telle sorte que le quatrième motif conducteur (240) soit adjacent au motif de connexion d'alimentation (230f) du troisième motif conducteur (230),
dans lequel le premier motif conducteur (210) et le câble coaxial (250) sont configurés pour rayonner un signal dans une première bande de fréquences,
dans lequel le premier motif conducteur (210) et le deuxième motif conducteur (220) sont configurés pour rayonner un signal dans une deuxième bande de fréquences différente de la première bande de fréquences, et
dans lequel le quatrième motif conducteur (240) et la région de fente (210s) sont configurés pour rayonner un signal dans une troisième bande de fréquences qui est plus large que la première bande de fréquences et la deuxième bande de fréquences.

2. Écouteur (100) selon la revendication 1, dans lequel la région de fente (210s) est formée entre le motif de connexion d'alimentation (230f) et le motif de connexion à la masse (230g),
dans lequel la région de fente (210s) est formée de manière à présenter une première longueur selon un axe sur la première surface (S1) et une première largeur selon l'autre axe, et
dans lequel le motif de connexion d'alimentation (230f) est relié à une ligne de signal du câble coaxial (250) disposé sous la structure diélectrique (201), et le motif de connexion à la masse (230g) est relié à une structure de masse (150g) reliée à un deuxième PCB (150b) disposé sous la structure diélectrique (201).

3. Écouteur (100) selon la revendication 2, dans lequel l'élément rayonnant (200) comprend en outre :
une deuxième région de fente (220s) formée sur la première surface (S1) de telle sorte que la deuxième région de fente (220s) soit positionnée au même point sur ledit axe que la région de fente (210s) et soit espacée de la région de fente (210s) selon l'autre axe ;
une troisième région de fente (230s) formée sur la première surface (S1) de telle sorte que la troisième région de fente (230s) soit espacée de la région de fente (210s) selon l'autre axe ; et
une quatrième région de fente (240s) formée sur la première surface (S1) et la troisième surface (S3) de telle sorte que la quatrième région de fente (240s) soit espacée de la région de fente (210s) selon l'autre axe.

4. Écouteur (100) selon la revendication 3, dans lequel la région de fente (210s) et la deuxième région de fente (220s) sont formées de telle sorte que la région de fente (210s) et la deuxième région de fente (220s) soient espacées, d'une deuxième longueur (L2) dans la direction de l'autre axe, d'une extrémité du premier motif conducteur (210) adjacente à la tige (122),
dans lequel la longueur de la troisième région de fente (230s) dans la direction de l'autre axe est définie comme une troisième longueur (L3), qui est plus courte que la deuxième longueur (L2), et
dans lequel la longueur allant d'une extrémité de la quatrième région de fente (240s) à l'extrémité du premier motif conducteur (210), dans la direction de l'autre axe, est définie comme une quatrième longueur (L4), qui est plus courte que la deuxième longueur (L2).

5. Écouteur (100) selon la revendication 4, dans lequel la deuxième longueur (L2), allant de l'extrémité du premier motif conducteur (210) à une extrémité d'un côté de la région de fente (210s) et à une extrémité d'un côté de la deuxième région de fente (220s), est définie de manière à être comprise dans une plage prédéterminée de longueurs, 4,4 mm servant de valeur de référence,
dans lequel la troisième longueur (L3) jusqu'à une extrémité d'un côté de la troisième région de fente (230s) est définie de manière à être comprise dans une plage de 2,4 à 2,75 mm, et
dans lequel la quatrième longueur (L4) jusqu'à une extrémité d'un côté de la quatrième région de fente (240s) est définie de manière à être comprise dans une plage prédéterminée de longueurs, 2,8 mm servant de valeur de référence.

6. Écouteur (100) selon l'une quelconque des revendications 2 à 5, dans lequel le deuxième motif conducteur (220) comprend un capteur tactile, et
dans lequel le premier motif conducteur (210) est formé de manière à présenter une première longueur de motif (Lp1) dans la direction dudit axe de la tige (122), et le deuxième motif conducteur (220) est formé de manière à présenter, dans la direction dudit axe, une deuxième longueur de motif (Lp2) plus courte que la première longueur de motif (Lp1).

7. Écouteur (100) selon l'une quelconque des revendications 3 à 6, dans lequel le quatrième motif conducteur (240), formé sur la troisième surface (S3) et faisant face au deuxième motif conducteur (240), comprend un capteur de force ou un capteur de pression (241), et
dans lequel le quatrième motif conducteur (240) est disposé entre une extrémité de l'autre côté d'un sous-motif (231) du troisième motif conducteur (230) formé sur la troisième surface (S3) et une extrémité d'un côté du motif de connexion d'alimentation (230f) formé sur la troisième surface (S3).

8. Écouteur (100) selon la revendication 7, dans lequel le troisième motif conducteur (230) comprend :
le sous-motif (231), disposé de manière à être espacé d'une extrémité d'un côté du quatrième motif conducteur (240) ;
le motif de connexion d'alimentation (230f), disposé de manière à être espacé d'une extrémité de l'autre côté du quatrième motif conducteur (240), et relié à une borne d'alimentation du PCB (150) ; et
le motif de connexion à la masse (230g), disposé de manière à être séparé du motif de connexion d'alimentation (230f) par la région de fente (210s), et relié à une masse du PCB (150).

9. Écouteur (100) selon la revendication 7 ou 8, dans lequel le troisième motif conducteur (230) comprend en outre :
un deuxième sous-motif (232), disposé de manière à être séparé du motif de connexion à la masse (230g) par la quatrième région de fente (240s), et relié au premier motif conducteur (210) entre la région de fente (210s) et la troisième région de fente (230s).

10. Écouteur (100) selon l'une quelconque des revendications 7 à 9, dans lequel le troisième motif conducteur (230) et la région de fente (210s), qui sont formés sur la troisième surface (S3), sont configurés pour rayonner un signal dans une troisième bande de fréquences plus large que la deuxième bande de fréquences, et
dans lequel le troisième motif conducteur (230) et la région de fente (210s) présentent une double résonance dans des bandes de 7 GHz et de 10 GHz pour une communication UWB.

11. Écouteur (100) selon l'une quelconque des revendications 7 à 10, dans lequel le troisième motif conducteur (230) et la région de fente (210s), qui sont formés sur la troisième surface (S3), la deuxième région de fente (220s), la troisième région de fente (230s) et la quatrième région de fente (240s) sont configurés pour rayonner un signal dans une troisième bande de fréquences plus large que la deuxième bande de fréquences, et
dans lequel le troisième motif conducteur (230) et la région de fente (210s), la deuxième région de fente (220s), la troisième région de fente (230s) et la quatrième région de fente (240s) présentent une résonance multiple dans une bande de fréquences allant de 6 GHz à 10 GHz pour une communication UWB.

12. Écouteur (100) selon l'une quelconque des revendications 6 à 11, dans lequel une ligne de signal (251) du câble coaxial (250) est reliée au premier motif conducteur (210),
dans lequel une masse (253) du câble coaxial (250) est reliée à une masse du PCB (150),
dans lequel la première longueur de motif (Lp1) du premier motif conducteur (210) est définie de manière à être comprise dans une plage prédéterminée de longueurs, 14,6 mm servant de valeur de référence, et la deuxième longueur de motif (Lp2) du deuxième motif conducteur (220) est définie de manière à être comprise dans une plage prédéterminée de longueurs, 13,6 mm servant de valeur de référence, et
dans lequel la première bande de fréquences est une bande de fréquences ayant une fréquence centrale de 2,3 GHz pour effectuer une communication Bluetooth avec un dispositif électronique, et la deuxième bande de fréquences est une bande de fréquences ayant une fréquence centrale de 2,6 GHz pour effectuer la communication Bluetooth.

13. Écouteur (100) selon l'une quelconque des revendications 2 à 12, dans lequel le premier motif conducteur (210) formé sur la première surface (S1) et le câble coaxial (250) formé sur la première surface (S1) rayonnent un premier signal dans la première bande de fréquences,
dans lequel le premier motif conducteur (210) et le deuxième motif conducteur (220) formé sur la deuxième surface (S2) perpendiculaire à la première surface (S1) sont configurés pour rayonner un deuxième signal dans la deuxième bande de fréquences,
dans lequel le premier motif conducteur (210) et le deuxième motif conducteur (220) sont formés de telle sorte qu'une extrémité d'un côté du premier motif conducteur (210) et une extrémité d'un côté du deuxième motif conducteur (220) soient espacées l'une de l'autre, et qu'un courant formé dans le premier motif conducteur (210) soit transféré au deuxième motif conducteur (220) par couplage dans la deuxième bande de fréquences, et
dans lequel une première direction d'un premier courant formé dans le premier motif conducteur (210) et dans le câble coaxial (250) sur la première surface (S1) est définie de manière à être orthogonale à une deuxième direction d'un deuxième courant formé dans le deuxième motif conducteur (220) sur la deuxième surface (S2) perpendiculaire à la première surface (S1), permettant ainsi à l'élément rayonnant (200) de réaliser un fonctionnement à large bande dans la première fréquence et dans la deuxième bande de fréquences.

14. Écouteur (100) selon l'une quelconque des revendications 2 à 13, dans lequel un motif de signal (211) du premier motif conducteur (210) est formé sous la forme d'un motif conducteur présentant une forme prédéterminée afin de rayonner un signal dans la première bande de fréquences et dans la deuxième bande de fréquences,
dans lequel un motif de masse (212) du premier motif conducteur (210) est relié électriquement à une masse (253) du câble coaxial (250),
dans lequel un motif de signal du deuxième motif conducteur (220) est formé sous la forme d'un motif conducteur présentant une forme prédéterminée afin de rayonner un signal dans la deuxième bande de fréquences et de fonctionner comme un capteur tactile, et
dans lequel un motif de masse du deuxième motif conducteur (220) est relié électriquement à la masse (253) du câble coaxial (250).

15. Écouteur (100) selon l'une quelconque des revendications 2 à 14, dans lequel un motif de signal du quatrième motif conducteur (240) est formé sous la forme d'un motif conducteur présentant une forme prédéterminée afin de fonctionner comme un capteur de force (241), et
dans lequel un motif de masse du quatrième motif conducteur (240) est relié électriquement à une masse (253) du câble coaxial (250).
